(19) Europäisches Patentamt / European Patent Office / Office européen des brevets

(11) **EP 2 974 930 B1**

(12) **EUROPEAN PATENT SPECIFICATION**

(45) Date of publication and mention
of the grant of the patent:
**11.12.2019 Bulletin 2019/50**

(21) Application number: **14765171.5**

(22) Date of filing: **12.03.2014**

(51) Int Cl.:
**B60W 10/04** *(2006.01)*          **B60W 10/06** *(2006.01)*
**B60W 10/101** *(2012.01)*        **F02D 29/00** *(2006.01)*
**F16H 61/02** *(2006.01)*          **F16H 61/662** *(2006.01)*
**B60W 50/08** *(2012.01)*          **B60W 30/182** *(2012.01)*
**B60W 30/188** *(2012.01)*

(86) International application number:
**PCT/JP2014/056452**

(87) International publication number:
**WO 2014/142158 (18.09.2014 Gazette 2014/38)**

(54) **VEHICLE CONTROL DEVICE AND MOTORCYCLE**

FAHRZEUGSTEUERUNGSVORRICHTUNG UND MOTORRAD

DISPOSITIF DE COMMANDE DE VÉHICULE ET MOTOCYCLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2013 JP 2013049637**

(43) Date of publication of application:
**20.01.2016 Bulletin 2016/03**

(73) Proprietor: **Yamaha Hatsudoki Kabushiki Kaisha
Iwata-shi, Shizuoka 438-8501 (JP)**

(72) Inventor: **ISHIOKA, Kazutoshi
Iwata-shi
Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 2 325 062        EP-A1- 2 851 253
EP-A2- 0 953 470        WO-A1-2012/017709
WO-A2-2011/021089    DE-A1- 19 742 604
JP-A- 2009 029 261     JP-A- 2010 163 060
JP-A- 2010 284 989     JP-A- 2012 202 325
JP-A- 2012 255 342**

## Description

The present invention relates to a vehicle control device and method and a motorcycle, and in particular to a technique for controlling a transmission ratio of a continuously variable transmission and an opening degree of a throttle valve.

The prior art document EP 2 851 253 A1 according to Article 54(3) EPC discloses a vehicle control device for controlling a transmission ratio of a continuously variable transmission and a throttle opening degree. Said device comprises a basic engine rotation speed calculation unit configured to calculate a basic engine rotation speed, based on information concerning a vehicle speed, a target engine rotation speed calculation unit configured to calculate a target engine rotation speed, based on the basic engine rotation speed, a target transmission ratio calculation unit configured to calculate a target transmission ratio, based on the target engine rotation speed, a target engine torque calculation unit configured to calculate a target engine torque, based on an accelerator operation amount and the basic engine rotation speed; and a target throttle opening degree calculation unit configured to calculate a target throttle opening degree, based on the target engine torque and the target engine rotation speed. The target engine rotation speed calculation unit is configured to calculate the target engine rotation speed, based on the basic engine rotation speed and a value concerning a driving force of a vehicle.

The prior art document WO 2011/021089 A2 discloses a vehicle control device for controlling a transmission ratio of a continuously variable transmission and a throttle opening degree. Said device comprises a target engine rotation speed calculation unit configured to calculate a target engine rotation speed, based on the actual engine rotation speed, a target transmission ratio calculation unit configured to calculate a target transmission ratio, based on the target engine rotation speed, a target engine torque calculation unit configured to calculate a target engine torque, based on an accelerator operation amount and the actual engine rotation speed, and a target throttle opening degree calculation unit configured to calculate a target throttle opening degree based on the actual engine rotation speed. The target engine rotation speed calculation unit is configured to calculate the target engine rotation speed.

Conventionally, there has been available a vehicle control device configured to control a transmission ratio of a continuously variable transmission and the opening degree (the throttle opening degree) of a throttle valve (for example, Japanese Patent No. 3754188). According to the conventional control, a driving force required for the vehicle is initially calculated, based on the amount of acceleration operation by a driver (an acceleration operation amount) and the vehicle speed, and a target engine rotation speed and a target throttle opening degree are then calculated such that the required driving force is obtained. The target engine rotation speed is set to a rotation speed that optimizes the fuel efficiency.

For a motorcycle, as influence of the engine rotation speed on a sense of riding is larger, compared to an automobile, there has been a strong desire to set the engine rotation speed to a rotation speed that can achieve a comfortable sense of riding. However, according to conventional control, as a rotation speed with the optimum fuel consumption is set as a target engine rotation speed, it is difficult to set the engine rotation speed to a rotation speed which can obtain a comfortable sense of riding.

An object of the present invention is to provide a vehicle control device and method and a motorcycle capable of setting an engine rotation speed to a rotation speed that can obtain a comfortable sense of riding and also obtaining a desired driving force.

According to the present invention said object is solved by a vehicle control device having the features of independent claim 1. Moreover, said object is solved by a vehicle control method having the features of independent claim 8. Preferred embodiments are laid down in the dependent claims.

Advantageous Effects of Invention

According to the present invention, as a rotation speed in accordance with the information on a vehicle speed is calculated as a target engine rotation speed, and a target engine torque and a target throttle opening degree are calculated using the target engine rotation speed as a base. This makes it possible to set the engine rotation speed to a rotation speed that can achieve a comfortable sense of riding.

Further, according to the present invention, it is possible to control the driving force of a vehicle not only through setting of a target throttle opening degree but also by changing the target engine rotation speed. Therefore, according to the present invention, a desired driving force can be readily obtained. For example, in a case where a desired driving force is not obtained through only setting of the target throttle opening degree, it is possible to obtain a desired driving force by changing the target engine rotation speed.

Brief Description of Drawings

FIG. 1 is a side view of a motorcycle including a control device according to an embodiment to explain the present invention;
FIG. 2 is a block diagram showing a configuration of a motorcycle;
FIG. 3 is a drawing to explain an outline of the control;
FIG. 4 is a time chart for explaining a driving wheel torque target value after correction which changes over time;
FIG. 5 is an example of a block diagram showing functions of the control device which does not completely illustrate the entire combination of the features of the independent claim;

FIG. 6 shows an example of an engine rotation speed map;

FIG. 7 shows an example of a relationship between a driving state value and a correction amount;

FIG. 8 shows an example of a map for use in calculation of a load state value;

FIG. 9 shows an example of a first engine torque map (first output characteristic information);

FIG. 10 is a block diagram showing functions of a conversion unit;

FIG. 11 is a block diagram explaining an example of change in a basic driving wheel torque target value and a driving wheel torque target value after correction, where the change is made by a transfer function which is a filter function used by a driving force correction unit;

FIG. 12 is a block diagram showing functions of an inverse conversion unit;

FIG. 13 shows a modified example of the first engine torque map;

FIG. 14 is a block diagram showing functions of a modified example of the conversion unit;

FIG. 15 is a time chart for explaining an effect of an embodiment in which only the inverse conversion unit uses an inertia torque. FIG. 15 (a) is a time chart in an embodiment in which both of a conversion unit and the inverse conversion unit use the inertia torque. FIG. 15 (b) is a time chart in the embodiment in which only the inverse conversion unit uses the inertia torque;

FIG. 16 is a block diagram showing a modified example of the control device which does not completely illustrate the entire combination of the features of the independent claim;

FIG. 17 is a block diagram showing a modified example of the control device which does not completely illustrate the entire combination of the features of the independent claim;

FIG. 18 shows a modified example of processing executed by a driving force target calculation unit;

FIG. 19 shows an example of a relationship between a vehicle speed and a basic running resistance calculated by a basic running resistance calculation unit shown in FIG. 18;

- FIG. 20 shows an example of a relationship between a running load and a correction amount calculated by a running load correction amount calculation unit shown in FIG. 18;

- FIG. 21(a) shows an example of a relationship between the vehicle speed and a vehicle speed coefficient, and FIG. 21 (b) shows an example of a relationship between the accelerator operation amount and an accelerator coefficient;

- FIG. 22 shows an example of a relationship between a correction coefficient used by the first correction processing unit shown in FIG. 18 and the vehicle speed;

FIG. 23 shows an example of a result of correction processing by the first correction processing unit shown in FIG. 18;

FIG. 24 is a block diagram showing an embodiment of a control device according to the invention;

FIG. 25 is a block diagram showing a rotation speed correction unit in a modified example;

FIG. 26 is a graph showing a relationship between an engine rotation speed and an engine torque; and

FIG. 27 is a graph showing a relationship between an engine power and an engine rotation speed.

Description of Embodiments

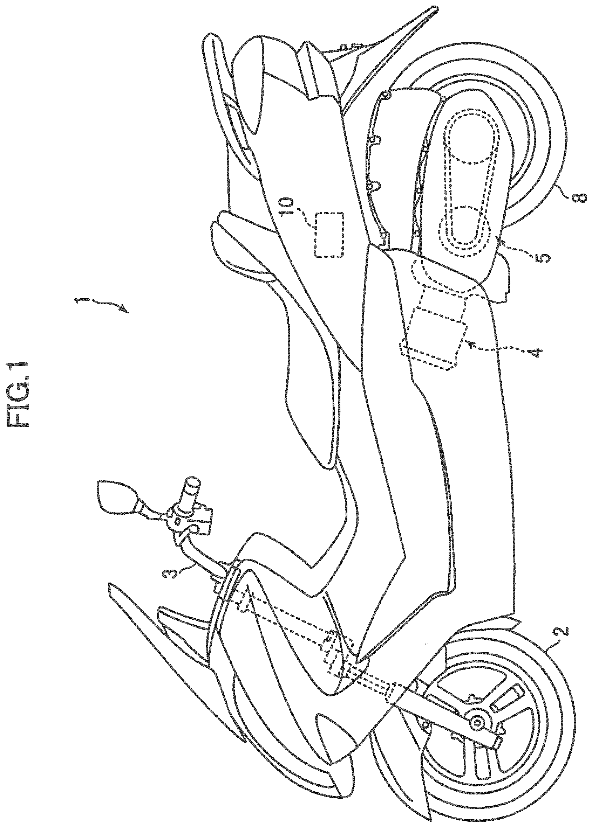

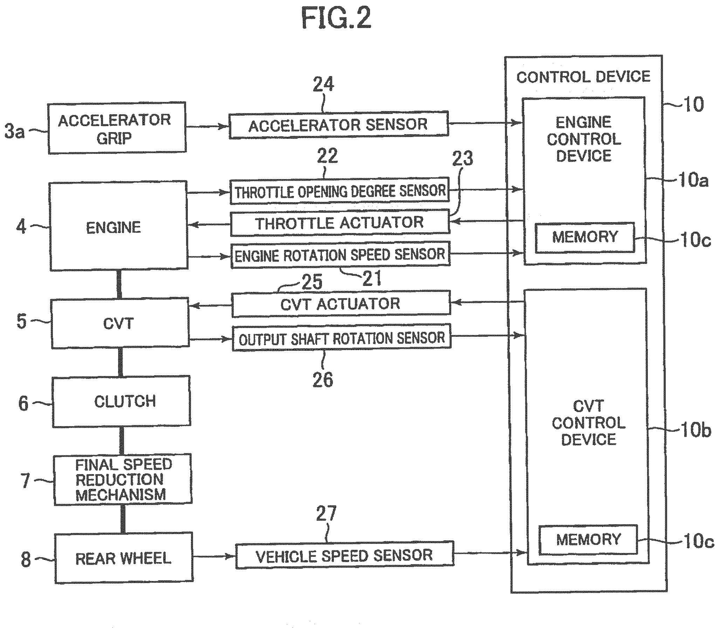

In the following, an embodiment to explain the present invention will be described with reference to the drawings. FIG. 1 is a side view of a motorcycle 1 having a control device 10 according to an embodiment of the present invention. FIG. 2 is a block diagram showing a configuration of the motorcycle 1.

As shown in FIG. 1, the motorcycle 1 includes, in the front part thereof, a front wheel 2 and a handle 3 for steering the front wheel 2. The handle 3 includes an accelerator grip 3a (see FIG. 2), and the accelerator grip 3a has an accelerator sensor 24 for detecting the amount of operation of the accelerator grip 3a (an accelerator operation amount).

As shown in FIG. 2, the motorcycle 1 includes an engine 4. The motorcycle 1 also includes a continuously variable transmission (hereinafter referred to as a CVT) 5, a clutch 6, and a final speed reduction mechanism 7, all disposed on a torque transmission path extending from the engine 4 to a rear wheel 8 which is the driving wheel. In the present example, the CVT 5 is positioned downstream the engine 4; the clutch 6 is positioned downstream the CVT 5; the final speed reduction mechanism 7 is positioned between the clutch 6 and the rear wheel 8. The clutch 6 is, for example, a centrifugal clutch.

The engine 4 includes a cylinder, a piston stored inside the cylinder, a crank shaft linked to the piston, and the like. The motorcycle 1 includes an engine rotation speed sensor 21 for detecting the engine rotation speed. The engine 4 includes, in an intake path connected to a combustion chamber of the engine, an injector which injects fuel toward the intake path and a throttle valve for controlling the amount of air to be supplied to the engine 4. The injector injects an amount of fuel in accordance with the amount of air to be supplied to the engine, that is, the opening of the throttle valve (hereinafter referred to as a throttle opening degree). The motorcycle 1 includes a throttle opening degree sensor 22 for detecting the throttle opening degree, and a throttle actuator 23 for changing the opening degree of the throttle valve.

The CVT 5 includes an input shaft interlinked to the crank shaft, a drive pulley provided to the input shaft, an output shaft, a driven pulley provided to the output shaft, and a belt wound around the drive pulley and the driven pulley for transmitting rotation (torque) of the drive pulley to the driven pulley. The motorcycle 1 includes a CVT actuator 25 for controlling the transmission ratio of the CVT 5. The CVT actuator 25 controls the transmission ratio by moving, for example, one of the two sheaves constituting the drive pulley. Alternatively, the CVT actuator 25 may control the transmission ratio by moving one of the two sheaves constituting the driven pulley.

As shown in FIG. 2, the motorcycle 1 includes the control device 10. Signals outputted from the above described sensors 21, 22, 24, 26, 27 are inputted into the control device 10. The above described actuators 23, 25 are driven in response to a signal outputted from the control device 10. The control device 10 controls the engine 4 and the CVT 5, based on the outputs from the sensors 21, 22, 24, 26, 27. In the present embodiment, the control device 10 controls the transmission ratio of the CVT 5 via the CVT actuator 25. Further, the control device 10 controls the throttle opening degree via the throttle actuator 23.

The control device 10 initially calculates an engine rotation speed to be targeted, based on the accelerator operation amount detected by the accelerator sensor 24. Then, the control device 10 calculates a transmission ratio to be targeted (hereinafter referred to as a target transmission ratio) and a throttle opening degree to be targeted (hereinafter referred to as a target throttle opening degree), based on the target engine rotation speed. The control device 10 drives the actuators 23, 25 such that the actual transmission ratio of the CVT 5 and the actual throttle opening degree become equal to the target transmission ratio and the target throttle opening degree, respectively. The processing executed by the control device 10 will be described later in detail.

As shown in FIG. 2, the control device 10 in the present example includes an engine control device 10a and a CVT control device 10b. Each of the control devices 10a, 10b includes a memory 10c and a microprocessor for executing a program stored in the memory 10c. In the memory 10c, a map for use in controlling the engine 4 and the CVT 5 is stored. The two control devices 10a, 10b are connected to and communicate with each other according to a predetermined protocol. One of the control devices 10a, 10b notifies the other of the control devices 10a, 10b of data relevant to the drive state of the motorcycle 1, detected by the sensors 21, 22, 24, 26, 27, and a result of processing by the one of the control devices 10a, 10b. In the present example, outputs from the engine rotation speed sensor 21, the throttle opening degree sensor 22, and the accelerator sensor 24 are inputted into the engine control device 10a. The engine control device 10a notifies the CVT control device 10b of the rotation speed and the throttle opening degree detected by these sensors 21, 22, 24. Meanwhile, outputs from the output shaft rotation sensor 26 and the vehicle speed sensor 27 are inputted into the CVT control device 10b. The CVT control device 10b notifies the engine control device 10a of the rotation speed and the vehicle speed detected by these sensors 26, 27 and a result (for example, the target engine rotation speed and the target transmission ratio obtained through processing to be described later) of processing by the CVT control device 10b.

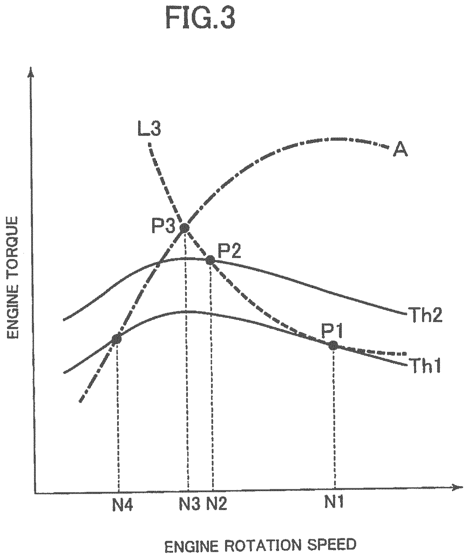

Below, control that is executed by the control device 10 will be described. FIG. 3 explains an outline of the control. In FIG. 3, the abscissa indicates the engine rotation speed, and the ordinate indicates the engine torque. FIG. 3 shows two torque curves each indicating a relationship between the engine torque and the engine rotation speed. Specifically, the two torque curves are a torque curve according to the throttle opening degree Th1 and a torque curve according to the throttle opening degree Th2. In FIG. 3, the line A is a curved line indicating a driving point at which the fuel efficiency is optimized (hereinafter referred to as an optimum fuel efficiency curve).

The control device 10 in the present example has three control modes. The first mode is a fuel efficiency mode; the second mode is a normal mode; a third mode is a comfortable driving mode.

The fuel efficiency mode will be explained. The control device 10 initially calculates a target engine rotation speed for use as a basis (hereinafter referred to as a basic target engine rotation speed), based on the throttle opening degree (hereinafter referred to as a basic throttle opening degree) corresponding to the accelerator operation amount detected by the accelerator sensor 24. In FIG. 3, the throttle opening degree Th1 is the basic throttle opening degree corresponding to the accelerator operation amount, and the engine rotation speed N1 is the basic target engine rotation speed. In the fuel efficiency mode, the control device 10 sets a rotation speed (hereinafter referred to as a final target engine rotation speed) lower than the basic target engine rotation speed N1 as the final target engine rotation speed. Specifically, the control device 10 sets an engine rotation speed N2, which is a rotation speed displaced from the basic target engine rotation speed N1 so as to be closer to the engine rotation speed N3 shown in FIG. 3, as the final target engine rotation speed. The engine rotation speed N3 is an engine rotation speed at a driving point P3 which is a driving point on the optimum fuel efficiency curve A and at which an engine power (engine torque × engine rotation speed) equal to that of the driving point P1 (the engine rotation speed N1, the basic throttle opening degree Th1) can be obtained. In FIG. 3, the line L3 is an equivalent power curve that indicates driving points at which an engine power equal to that of the driving point P1 can be obtained.

The control device 10 sets the target throttle opening degree such that the driving force (for example, the torque of the rear wheel 8) obtained at the driving point P1 is maintained while decreasing the final target engine rotation speed from the basic target engine rotation speed N1. That is, the control device 10 sets, as the target throttle opening degree, a throttle opening degree Th2 at the driving point P2 at which a driving force equal to that of the driving point P1 can be obtained and the engine rotation speed is equal to the final target engine rotation speed N2. The torque of the rear wheel 8 is proportional to the engine power. Thus, the driving point P2 results in a driving point on the equivalent power curve L3. The above outlines the fuel efficiency mode.

The normal mode will be explained. The control device 10 calculates the target engine rotation speed N1 for use as a basis, based on the basic throttle opening degree Th1. In the normal mode, the control device 10 sets the target engine rotation speed N1 as the final target engine rotation speed. The control device 10 calculates the target transmission ratio from the target engine rotation speed N1. The control device 10 sets the basic throttle opening degree Th1 as the target throttle opening degree.

The comfortable driving mode will be explained. The control device 10 calculates the target engine rotation speed N1 for use as a basis, based on the basic throttle opening degree Th1. In the comfortable driving mode, the target transmission ratio is calculated from the target engine rotation speed N1, using the target engine rotation speed N1 as the final target engine rotation speed. The control device 10 calculates the target value (hereinafter referred to as a basic driving wheel torque target value) as to the driving force (for example, the torque of the rear wheel 8, which will be hereinafter referred to as a rear wheel torque) of the vehicle, based on the basic throttle opening degree Th1 and the target engine rotation speed N1. In a case where an acceleration request from a driver satisfies a predetermined correction condition, the control device 10 applies a filter to the basic driving wheel torque target value to determine the result of the filter as a final target of the driving wheel torque (hereinafter referred to as a final driving wheel torque target value) . This filter is defined such that the final driving wheel torque target value changes more moderately, compared to the basic driving wheel torque target value. The control device 10 calculates the target throttle opening degree from the final driving wheel torque target value.

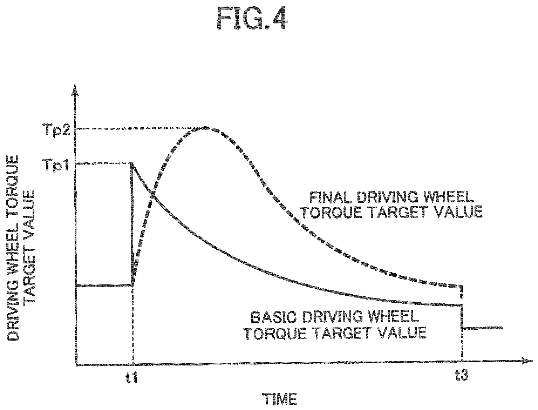

FIG. 4 is a time chart for explaining change over time of the final driving wheel torque target value. In FIG. 4, time t1 is a time at which the accelerator operation amount increases and an acceleration request from a driver satisfies a preset correction condition. Time t3 is a time at which the accelerator operation amount decreases, and the acceleration request becomes no longer satisfying the preset correction condition. As shown in FIG. 4, the basic driving wheel torque target value sharply increases at time t1 due to the increase of the accelerator operation amount, and thereafter decreases moderately. Meanwhile, the final driving wheel torque target value moderately increases to a value higher than the peak value Tp1 of the basic driving wheel torque target value, and thereafter decreases more moderately than the basic driving wheel torque target value. In the comfortable driving mode, the control device 10 calculates the target throttle opening degree from the basic throttle opening degree Th1 such that the final driving wheel torque target value changes as described above. The above outlines the comfortable driving mode.

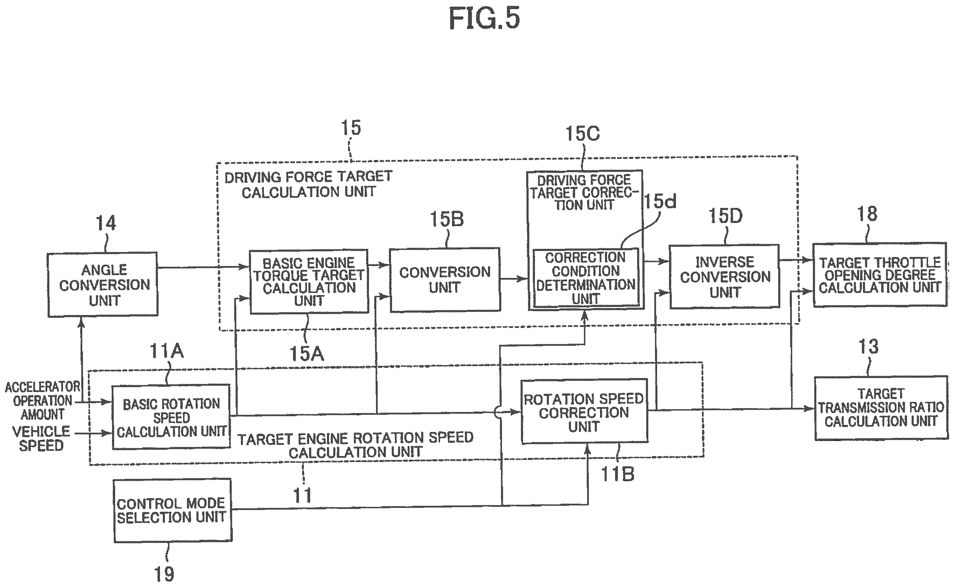

FIG. 5 is a block diagram showing functions of the control device 10. The processing indicated by each block may be executed by either of the engine control device 10a and the CVT control device 10b.

The control device 10 includes a control mode selection unit 19. The control mode selection unit 19 selects a control mode which the control device 10 should execute from among the above described three modes. The selection can be made according to a variety of methods. For example, a mode selection switch for operation by a driver may be provided to the handle 3, and the control mode selection unit 19 selects a control mode, based on the signal received from the switch.

The control mode selection unit 19 may select a control mode, based on the driving state of the vehicle. For example, in a case where constant speed running continues for a predetermined period of time or longer, or in a case where the frequency of change in the accelerator operation amount per a unit period of time is less than a first threshold, the control mode selection unit 19 selects the fuel efficiency mode. In a case where the frequency of change in the accelerator operation amount is greater than a second threshold, or in a case where the accelerator operation amount is greater than a threshold, the control mode selection unit 19 may select the comfortable driving mode. In a case where the driving state of the vehicle corresponds to neither the selection condition for the fuel efficiency mode nor that for the comfortable driving mode, the control mode selection unit 19 selects the normal mode.

Processing for calculating the target transmission ratio will be described. The control device 10 functionally includes a target engine rotation speed calculation unit 11 and a target transmission ratio calculation unit 13. The target engine rotation speed calculation unit 11 includes a basic rotation speed calculation unit 11A and a rotation speed correction unit 11B. The control device 10 repetitively executes a series of processing by these functional units 11A, 11B, 13 in a predetermined cycle.

The basic rotation speed calculation unit 11A calculates the above mentioned basic target engine rotation speed (N1 in FIG. 3), based on the accelerator operation amount detected by the accelerator sensor 24. Specifically, the basic rotation speed calculation unit 11A calculates the basic target engine rotation speed through the processing described below.

Note here that a basic target engine rotation speed refers to the rotation speed of the engine 4 which can be uniquely obtained through conversion based on information concerning the accelerator operation amount and information concerning the vehicle speed, that is, a target value of the rotation speed of the input shaft of the CVT 5 free from correction by the rotation speed correction unit 11B to be described later. Information concerning the accelerator operation amount indicates information corresponding on a one-to-one basis to the accelerator operation amount as a result of appropriate conversion, and information concerning the vehicle speed indicates information concerning the rotation speed of members provided downstream the output shaft of the CVT (the axle, the final deceleration gear, or the like). For example, the rotation speed of the rear wheel 8 is information concerning the vehicle speed as being converted into the vehicle speed through multiplication of the circumferential length of the rear wheel 8. Further, the rotation speed of the output shaft of the CVT 5 (equal to the rotation speed of the driven pulley) is information concerning the vehicle speed as being converted into the vehicle speed through multiplication of the final reduction ratio and the circumferential length of the rear wheel 8 with the clutch 6 connected. Although the accelerator operation amount and the vehicle speed are used as the information concerning the accelerator operation amount and the information concerning the vehicle speed, respectively, in this embodiment, information other than these may be used.

The memory 10c has a map (hereinafter referred to as an engine rotation speed map) stored therein for correlating the accelerator operation amount and the engine rotation speed. The basic rotation speed calculation unit 11A calculates an engine rotation speed in accordance with the accelerator operation amount detected by the accelerator sensor 24, with reference to the engine rotation speed map, and determines the resultant engine rotation speed as the basic target engine rotation speed.

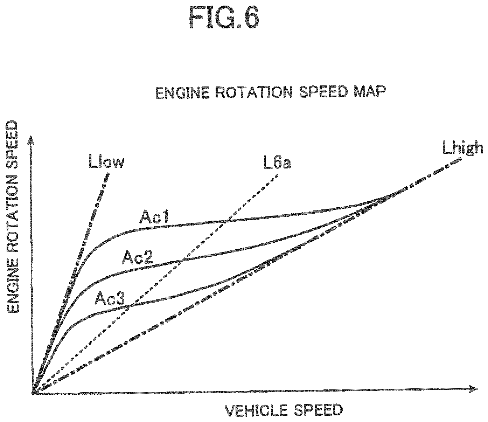

FIG. 6 shows an example of the engine rotation speed map. In the engine rotation speed map in the present example, the vehicle speed, the accelerator operation amount, and the engine rotation speed are correlated to one another. In FIG. 6, the abscissa indicates the vehicle speed, and the ordinate indicates the engine rotation speed. As to each of a plurality of accelerator operation amounts (Ac1 to Ac3, Ac1>Ac2>Ac3 in FIG. 6 (a)), a line indicating a relationship between the vehicle speed and the engine rotation speed is shown. The inclination of a straight line (for example, the straight line L6a) passing through any driving point correspond the total reduction ratio of the torque transmission path extending from the engine 4 to the rear wheel 8. The straight line Llow with the largest inclination indicates a relationship between the vehicle speed and the engine rotation speed with the transmission ratio set to LOW (the maximum reduction ratio). Meanwhile, the straight line Lhigh with the smallest inclination indicates a relationship between the vehicle speed and the engine rotation speed with the transmission ratio set to HIGH (the minimum reduction ratio). In the example shown in FIG. 6, assuming a constant accelerator operation amount, the engine rotation speed increases proportional to the vehicle speed in the low speed driving area (driving points on the line Llow) and in the high speed driving area (driving points on the line Lhigh). However, in the middle speed driving area (driving points between the straight line Llow and the straight line Lhigh), the change rate of the engine rotation speed relative to the vehicle speed is smaller, compared to that in the low speed driving area and the high speed driving area. Further, assuming a constant vehicle speed, the engine rotation speed becomes higher as the accelerator operation amount becomes larger in the middle speed driving area.

With reference to the engine rotation speed map, the basic rotation speed calculation unit 11A calculates an engine rotation speed corresponding to the accelerator operation amount detected by the accelerator sensor 24 and the vehicle speed detected by the vehicle speed sensor 27 to determine the engine rotation speed as the basic target engine rotation speed.

The engine rotation speed map may correlate the throttle opening degree, the vehicle speed, and the engine rotation speed. In that case, a map or a relational expression for correlating the throttle opening degree and the accelerator operation amount is stored in advance in the memory 10c. Using this map or the relational expression, the basic rotation speed calculation unit 11A calculates the throttle opening degree corresponding to the accelerator operation amount detected by the accelerator sensor 24 . Then, with reference to the engine rotation speed map, the basic rotation speed calculation unit 11A calculates an engine rotation speed corresponding to the calculated throttle opening degree and the vehicle speed to determine the engine rotation speed as the basic target engine rotation speed.

The basic rotation speed calculation unit 11A may execute filter processing. For example, the basic rotation speed calculation unit 11A may include a low pass filter, and apply the filter processing to the engine rotation speed calculated based on the engine rotation speed map to determine the value obtained from the filter processing as the basic target engine rotation speed.

The basic rotation speed calculation unit 11A obtains an engine rotation speed higher than the engine rotation speed that optimizes the fuel efficiency as the basic target engine rotation speed. That is, the basic target engine rotation speed is higher than the engine rotation speed that optimizes the fuel efficiency (hereinafter referred to as optimum fuel efficiency engine rotation speed) at the basic throttle opening degree corresponding to the accelerator operation amount detected. In FIG. 3, the basic target engine rotation speed N1 is higher than the engine rotation speed N4 that optimizes the fuel efficiency at the basic throttle opening degree Th1 (the engine rotation speed N4 is a rotation speed at a driving point on the optimum fuel efficiency curve A). The engine rotation speed in the engine rotation speed map is correlated to the accelerator operation amount such that such a basic target engine rotation speed is obtained. Setting the basic engine rotation speed as described above results in a higher engine power obtained when the throttle opening degree is maximized. Accordingly, it is possible to improve acceleration responsiveness of the motorcycle 1.

A basic target engine rotation speed higher than the optimum fuel efficiency engine rotation speed may not be necessarily calculated at all driving points. For example, in a driving state with a relatively large (for example, the maximum) accelerator operation amount and a low vehicle speed, the basic target engine rotation speed may be lower than the optimum fuel efficiency engine rotation speed. With the above, it is possible to improve acceleration responsiveness of the motorcycle 1. Specifically, in the process with the engine rotation speed increasing, the engine torque is partially consumed as an inertia torque which increases the engine rotation speed. Thus, with the engine rotation speed map where a basic target engine rotation speed lower than the optimum fuel efficiency engine rotation speed is correlated to a larger accelerator operation amount, it is possible to prevent the engine torque from being consumed as an inertia torque when a driver increases the accelerator operation amount. As a result, it is possible to improve acceleration responsiveness of the motorcycle 1.

The basic rotation speed calculation unit 11A may correct the basic target engine rotation speed, depending on the driving state of the vehicle. For example, the basic rotation speed calculation unit 11A may increase the basic target engine rotation speed when, for example, the accelerator operation amount sharply increases such that the change speed thereof exceeds a threshold.

While the fuel efficiency mode is selected, the rotation speed correction unit 11B corrects the basic target engine rotation speed to calculate the corrected correction rotation speed as the above described final target engine rotation speed. Specifically, the rotation speed correction unit 11B calculates, as the final target engine rotation speed, an engine rotation speed (N2 in FIG. 3) closer to the optimum fuel efficiency engine rotation speed (N3 in FIG. 3) than the basic target engine rotation speed. In other words, the rotation speed correction unit 11B displaces the target engine rotation speed from the basic target engine rotation speed so as to be closer to the optimum fuel efficiency engine rotation speed to determine the resultant target engine rotation speed as the final target engine rotation speed. When the fuel efficiency mode is not selected, the rotation speed correction unit 11B outputs the basic target engine rotation speed as the final target engine rotation speed without the correction.

An example of processing executed by the rotation speed correction unit 11B will be described. The rotation speed correction unit 11B calculates a driving state value, based on at least one parameter selected from among the accelerator operation amount, the vehicle speed, an accelerator operation amount change speed which is a differential value of the accelerator operation amount, and the acceleration. Then, the rotation speed correction unit 11B calculates a correction amount as to the target engine rotation speed, based on the driving state value. Then, the rotation speed correction unit 11B adds the correction amount to, or subtract the correction amount from, the basic target engine rotation speed to determine the result of calculation as the final target engine rotation speed. The driving state value is a value indicating a stability of the driving state. For example, higher stability, that is, a smaller possibility of acceleration or deceleration, results in a higher driving state value.

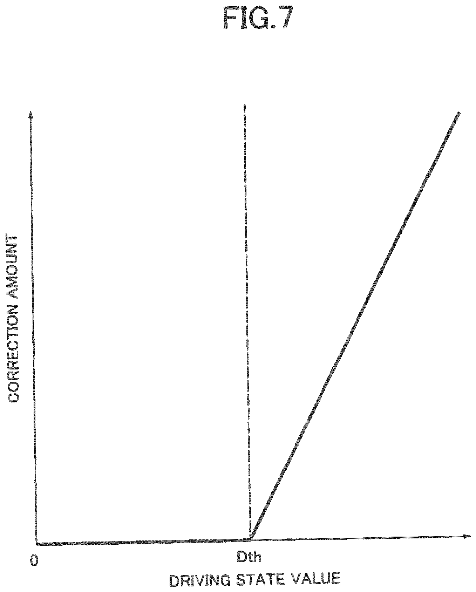

FIG. 7 shows an example of a relationship between the driving state value and the correction amount. Numeric data (for example, a map or an operational expression) indicating the relationship shown in FIG. 7 is stored in the memory 10c. As shown in FIG. 7, in the case of a small driving state value, that is, in the case of a less stable driving state, the correction amount is set to 0, and thus the correction for displacing the basic target engine rotation speed so as to be closer to the optimum fuel efficiency engine rotation speed is not conducted. Meanwhile, when the driving state value is in excess of a threshold Dth, the correction amount gradually increases in accordance with the increase of the driving state value. In the example shown in FIG. 7, the correction amount is proportional to the driving state value. The relationship between the driving state value and the correction amount may be desirably changed. For example, the relationship between the correction amount and the driving state value may be indicated by any curved line such that, for example, the correction amount increases in accordance with the increase of the driving state value. Alternatively, the correction amount may increase in a stepwise manner in accordance with the increase of the driving state value. An upper limit may be imposed on the correction amount itself.

The rotation speed correction unit 11B calculates the driving state value as described below, for example. The rotation speed correction unit 11B calculates a first load state value, based on the accelerator operation amount and the vehicle speed. The rotation speed correction unit 11B calculates a second load state value, based on the change speed of the accelerator operation amount. The rotation speed correction unit 11B further calculates a third load state value, based on the vehicle speed and the acceleration of a vehicle. The rotation speed correction unit 11B calculates the driving state value, using all or some of these load state values. Each load state value is a value that comprehensively evaluates a load applied to the engine 4 and a possibility of the change of the load, and indicates the stability of the driving state, similar to the above described driving state value. For example, a larger load state value means a more stable driving state of a vehicle, with a smaller possibility of change of the driving state in response to an acceleration instruction or the like. Meanwhile a smaller load state value means a higher possibility of change in the driving state of a vehicle, with frequent acceleration or deceleration anticipated.

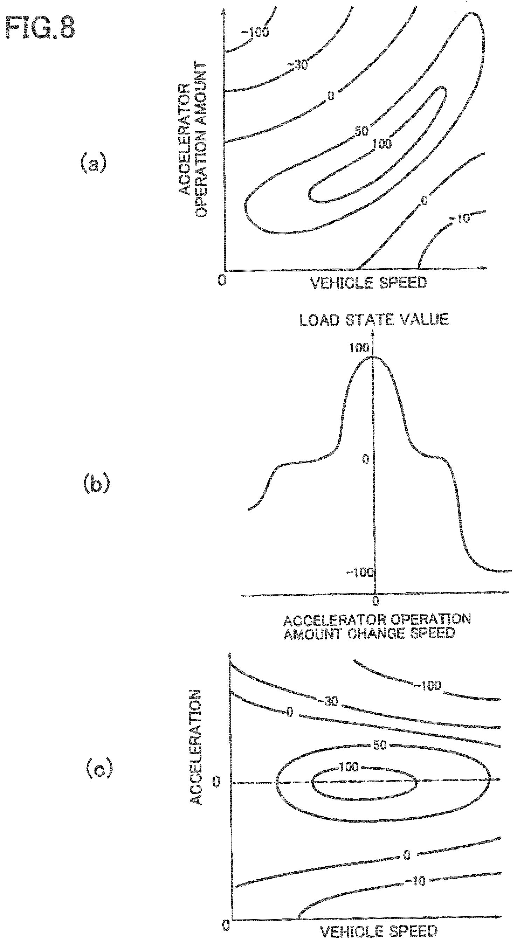

FIG. 8(a) shows an example of a map for correlating the accelerator operation amount, the vehicle speed, and the first load state value. In FIG. 8(a), the solid line indicates a contour line of the first load state value. In this map, in a driving area with a stable driving state anticipated (for example, an area with the vehicle speed and the accelerator operation amount both at the middle level), the first load state value is set high. With reference to this map, the rotation speed correction unit 11B calculates the first load state value from the accelerator operation amount and the vehicle speed, both detected based on outputs from the sensors.

FIG. 8 (b) shows an example of a map for correlating the change speed of the accelerator operation amount and the second load state value. In this map as well, in a driving area with a stable driving state expected, that is, in a driving area with a small change speed of the accelerator operation amount, the second load state value is set high. The rotation speed correction unit 11B calculates the change speed of the accelerator operation amount, and thereafter, calculates a second load state value corresponding to the change speed of the calculated accelerator operation amount, with reference to the map.

FIG. 8 (c) shows an example of a map for correlating the vehicle speed, the acceleration of a vehicle, and the third load state value. In this diagram, the solid line indicates a contour line of the third load state value L3. In this map as well, in a driving area with a stable driving state expected, specifically, in a driving area with the vehicle speed at a middle level and a small acceleration, the third load state value is set high. The rotation speed correction unit 11B calculates a third load state value corresponding to the vehicle speed detected based on an output from the sensor and the acceleration calculated based on the vehicle speed, with reference to this map.

Then, the rotation speed correction unit 11B selects a load state value for use in calculation of the driving state value. For example, when the signs (plus sign or minus sign) of all of the above described load state values are the same, the rotation speed correction unit 11B uses all those load state values in calculation of the driving state value. Meanwhile, when the signs of all of the load state values are not the same, the rotation speed correction unit 11B does not use any load state value, and does not calculate a driving state value in this processing. That is, the rotation speed correction unit 11B does not update the driving state value obtained in the previous processing.

The rotation speed correction unit 11B may select two or three of the first load state value, the second load state value, and the third load state value, the two or three having the same sign, to calculate the driving state value, using the selected load state values.

The rotation speed correction unit 11B calculates the driving state value, based on the selected load state value. Specifically, the rotation speed correction unit 11B calculates the driving state value, based on the selected load state value and the driving state value obtained in the previous processing. For example, the rotation speed correction unit 11B calculates a multiplicative product of the selected load state values, and adds the multiplicative product to the driving state value obtained in the previous processing to determine the result of addition as a new driving state value. Alternatively, the rotation speed correction unit 11B may calculate the sum of the selected load state values, and add the sum to the driving state value obtained in the previous processing to determine the result of addition as a new driving state value. Still alternatively, the rotation speed correction unit 11B may calculate the average or the median of the selected load state values, and add the average or the median to the driving state value obtained in the previous processing to determine the result of addition as a new driving state value. When the driving state value is resulted in an excessive large value, for example, when steady running continues for a long period of time, the rotation speed correction unit 11B may use a predetermined driving state value without updating the driving state value.

Based on the driving state value calculated as described above, the rotation speed correction unit 11B calculates a correction amount relative to the basic target engine rotation speed. For example, the rotation speed correction unit 11B calculates a correction amount from the driving state value, using the above described map shown as an example in FIG. 7 or an arithmetic expression. Then, the rotation speed correction unit 11B subtracts the correction amount from the basic target engine rotation speed to determine the result as the final target engine rotation speed. In order to prevent sharp change in the correction amount, the correction amount may be calculated based not only on the driving state value but also on the correction amount obtained in the past processing. For example, the rotation speed correction unit 11B may determine the average of the correction amounts calculated during a predetermined period of time as a correction amount obtained in this processing. The rotation speed correction unit 11B may execute filter processing as to the correction amount.

When the rotation speed correction unit 11B subtracts the correction amount from the basic target engine rotation speed, and the resultant value is smaller than the optimum fuel efficiency engine rotation speed (that is, N3 in FIG. 3), the rotation speed correction unit 11B determines the optimum fuel efficiency engine rotation speed as the final target engine rotation speed. Further, when the value resulting from subtraction of the correction amount from the basic target engine rotation speed is smaller than a lower limit of the engine rotation speed which is defined by the current vehicle speed, the rotation speed correction unit 11B determines the lower limit as the final target engine rotation speed. The lower limit of the engine rotation speed is determined based on the vehicle speed and the minimum transmission ratio (the transmission ratio with the CVT 5 set HIGH) . Meanwhile, when the basic target engine rotation speed is lower than the optimum fuel efficiency engine rotation speed, that is, for example, when the basic target engine rotation speed is lower than the engine rotation speed N3 shown in FIG. 3, the rotation speed correction unit 11B may determine the above described basic target engine rotation speed as the final target engine rotation speed without executing the above described correction.

The correction by the rotation speed correction unit 11B is not limited to the above described. For example, the rotation speed correction unit 11B may multiply the driving state value to a predetermined value to determine the multiplicative result as the correction amount. Alternatively, an input device via which a rider inputs an extent of fuel efficiency may be provided to the vehicle. And the rotation speed correction unit 11B may calculate a rotation speed which divides a difference between the optimum fuel efficiency engine rotation speed and the basic target engine rotation speed in a proportion based on the information (value) obtained from the input device, to determine the resultant rotation speed as the final target engine rotation speed.

The target transmission ratio calculation unit 13 calculates the target transmission ratio such that the actual engine rotation speed becomes equal to the final target engine rotation speed. That is, the target transmission ratio calculation unit 13 calculates the target transmission ratio, based on the final target engine rotation speed and the rotation speed of the mechanism downstream the CVT 5. The transmission ratio calculation unit 13 in the present example calculates the target transmission ratio, based on the final target engine rotation speed and the vehicle speed detected by the vehicle speed sensor 27. For example, the target transmission ratio calculation unit 13 calculates the target transmission ratio, based on the reduction ratio of the final speed reduction mechanism 7 and the value obtained by dividing the final target engine rotation speed by the vehicle speed. In the case where the transmission ratio obtained based on the value obtained by dividing the final target engine rotation speed by the vehicle speed and the reduction ratio of the final speed reduction mechanism 7 exceeds the upper limit (LOW) or the lower limit (HIGH) of the transmission ratio of the CVT 5, the target transmission ratio calculation unit 13 determines the upper limit or the lower limit as the target transmission ratio.

Processing for calculating the target throttle opening degree will be described. As shown in FIG. 5, the control device 10 functionally includes an angle conversion unit 14, a driving force target calculation unit 15, and a target throttle opening degree calculation unit 18. The driving force target calculation unit 15 includes a basic engine torque target calculation unit 15A, a conversion unit 15B, a driving force target correction unit 15C, and an inverse conversion unit 15D. The control device 10 repetitively executes a series of processing executed by these functional units 14, 15A, 15B, 15C, 18 in a predetermined cycle.

The memory 10c has a map or a relational expression stored therein for converting the accelerator operation amount into the throttle opening degree. The throttle opening degree defined by the map or the relational expression has a one-to-one relationship relative to the accelerator operation amount. For example, the throttle opening degree is proportional to the accelerator operation amount. With reference to the relational expression or the map, the angle conversion unit 14 converts the accelerator operation amount detected by the accelerator sensor 24 into the throttle opening degree to determine the resultant throttle opening degree as the basic throttle opening degree.

The driving force target calculation unit 15 calculates a target value as to the driving force of the vehicle, based on the basic target engine rotation speed. In the present embodiment, a target value as to the driving force of a vehicle includes a target value as to the engine torque (hereinafter referred to as an engine torque target value) and a target value as to the torque of the driving wheel (that is, the rear wheel 8) (hereinafter referred to as a driving wheel torque target value) . The engine torque target value includes, specifically, an engine torque itself to be targeted, and an engine power to be targeted. The driving wheel torque target value includes, specifically, a rear wheel torque to be targeted, and a rear wheel power to be targeted (rear wheel torque $\times$ rotation speed of the rear wheel 8). The target throttle opening degree calculation unit 18 calculates the target throttle opening degree, based on those target values. Below, an example in which an engine torque to be targeted is used as the engine torque target value, and a wheel torque to be targeted is used as the driving wheel torque target value will be described.

The basic engine torque target calculation unit 15A calculates the engine torque target value (this target value will be hereinafter referred to as a basic engine torque target value), based on the basic target engine rotation speed. The basic engine torque target calculation unit 15A calculates the basic engine torque target value through processing described below, for example.

The memory 10c has first output characteristic information stored therein in advance which is defined based on the output characteristic of the engine 4. The first output characteristic information is information indicating, for example, a relationship between the throttle opening degree, the engine rotation speed, and the engine torque. In the present example, a map for correlating the throttle opening degree, the engine rotation speed, and the engine torque is stored in the memory 10c (the map will be hereinafter referred to as a first engine torque map). With reference to the first engine torque map, the basic engine torque target calculation unit 15A calculates an engine torque corresponding to the basic throttle opening degree obtained by the angle conversion unit 14 and the basic target engine rotation speed to determine the engine torque as the basic engine torque target value.

In the case where the engine torque target value is an engine power to be targeted, the first output characteristic information may be a map or a relational expression for correlating the throttle opening degree, the engine rotation speed, and the engine power. Alternatively, a relational expression or a map that shows a relationship between the accelerator operation amount, the engine rotation speed, and the engine torque may be stored in the memory 10c as the first output characteristic information. In that case, the basic engine torque target calculation unit 15A calculates an engine torque corresponding to the accelerator operation amount detected by the accelerator sensor 24 and the basic target engine rotation speed, with reference to the first output characteristic information, to determine the engine torque as the basic engine torque target value.

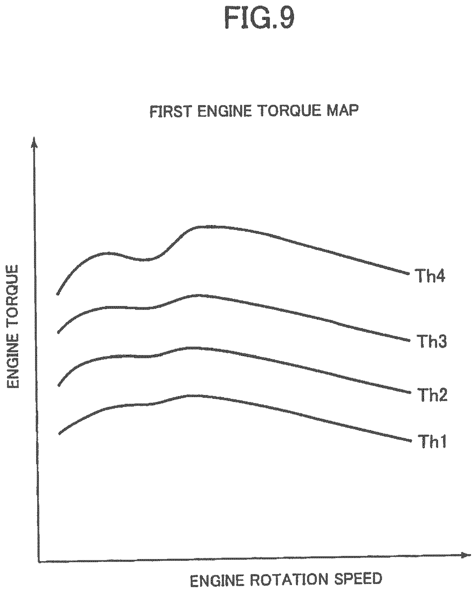

FIG. 9 shows an example of the first engine torque map. In FIG. 9, the abscissa indicates the engine rotation speed, and the ordinate indicates the engine torque. In FIG. 9, torque curves each indicating a relationship between the engine rotation speed and the engine torque is shown for the throttle opening degrees Th1 to Th4, as an example. With reference to the first engine torque map, the basic engine torque target calculation unit 15A calculates a basic engine torque target value corresponding to the basic throttle opening degree and the basic target engine rotation speed.

The accelerator operation amount, the engine rotation speed, and the engine torque all set in the first engine torque map in the present example are of values based on the actual output characteristic of the engine 4. However, the throttle opening degree, the engine rotation speed, and the engine torque all set in the first engine torque map may be partially not based on the actual output characteristic of the engine 4. Specifically, the throttle opening degree, the engine rotation speed, and the engine torque all set in the first engine torque map may be set to respective values that are preferable in view of comfort of riding or acceleration capability of the motorcycle 1, which will be described later.

The conversion unit 15B converts the basic engine torque target value into the above described driving wheel torque target value, that is a target value as to the rear wheel torque, based on the basic target engine rotation speed (a driving wheel torque target value calculated by the conversion unit 15B will be hereinafter referred to as a basic driving wheel torque target value). In other words, the conversion unit 15B in the present example converts an engine torque to be targeted into a rear wheel torque to be targeted. The torque to be transmitted from the engine 4 to the rear wheel 8 contains an inertia torque of the engine 4 generated due to change in the engine rotation speed, besides the torque outputted from the engine 4. The torque outputted from the engine 4 is reduced due to abrasion between the belt of the CVT 5 and the pulley and a torque necessary to bend the belt before being transmitted to the rear wheel 8. The conversion unit 15B calculates the basic driving wheel torque target value from the basic engine torque target value in consideration of such addition or loss of a torque, or the like.

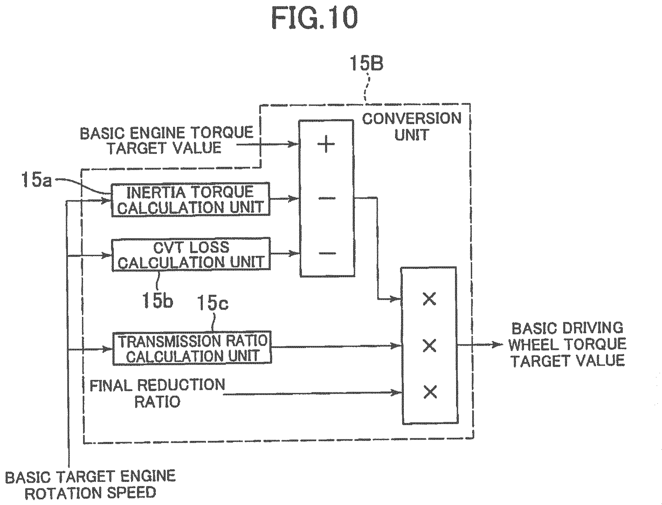

FIG. 10 is a block diagram showing functions of the conversion unit 15B. As shown in the diagram, the conversion unit 15B functionally includes an inertia torque calculation unit 15a, a CVT loss calculation unit 15b, and a transmission ratio calculation unit 15c.

The inertia torque calculation unit 15a calculates an inertia torque of the engine 4 generated due to change in the engine rotation speed. The inertia torque calculation unit 15a in the present example calculates an inertia torque, based on the basic target engine rotation speed. Specifically, the inertia torque calculation unit 15a calculates an inertia torque, based on the change speed of the basic target engine rotation speed and an inertia moment of the machine upstream the CVT 5 (the crank shaft and the piston of the engine 4) (inertia torque = inertia moment × change speed of the basic target engine rotation speed). The method for calculating an inertia torque is not limited to the above described. For example, the inertia torque calculation unit 15a may calculate an inertia torque, based on the change speed of the transmission ratio. In an example using the change speed of the transmission ratio, the inertia torque calculation unit 15a calculates the transmission ratio, based on, for example, the basic target engine rotation speed and the vehicle speed, and then calculates the inertia torque, based on the change speed of the transmission ratio, the acceleration of the vehicle, and the above described inertia moment.

The CVT loss calculation unit 15b calculates a torque that is lost in the CVT 5 (this torque will be referred to as a CVT loss). The CVT loss calculation unit 15b calculates the CVT loss, based on, for example, the basic target engine rotation speed, the rotation speed of the output shaft detected by the output shaft rotation sensor 26, and the torque transmitted via the CVT 5 (a torque outputted from the engine 4).

The transmission ratio calculation unit 15c calculates the transmission ratio of the CVT 5. The transmission ratio calculation unit 15c in the present example calculates the transmission ratio of the CVT 5, based on the basic target engine rotation speed. For example, the transmission ratio calculation unit 15c calculates the transmission ratio, based on the basic target engine rotation speed, the vehicle speed detected by the vehicle speed sensor 27, and the reduction ratio of the final speed reduction mechanism 7 (hereinafter referred to as a final reduction ratio) (for example, transmission ratio = rotation speed of the axle of the rear wheel 8 × final reduction ratio / basic target engine rotation speed). In the case where the value calculated in this calculation is in excess of the upper limit (LOW) or the lower limit (HIGH) of the transmission ratio of the CVT 5, the conversion unit 15B uses this upper limit or lower limit in the processing to be described later.

As shown in FIG. 10, the conversion unit 15B in the present example initially subtracts the inertia torque calculated by the inertia torque calculation unit 15a and the CVT loss calculated by the CVT loss calculation unit 15b from the basic engine torque target value (a value resulting from this subtraction will be referred to as a substantial transmitted torque) . Thereafter, the conversion unit 15B multiplies the transmission ratio obtained by the transmission ratio calculation unit 15c and the final reduction ratio to the substantial transmitted torque to determine the value resulting from the multiplication as the basic driving wheel torque target value.

As described above, the basic driving wheel torque target value may be a power to be targeted from the rear wheel 8. In that embodiment, the conversion unit 15B may execute processing to be described below, for example, to calculate the basic driving wheel torque target value from the basic engine torque target value. That is, the conversion unit 15B subtracts the inertia torque from the basic engine torque target value, and then multiplies the basic target engine rotation speed to the value resulting from the subtraction. Thereafter, the conversion unit 15B subtracts the CVT loss (a power lost in CVT 5) from the value resulting from the multiplication. The conversion unit 15B multiplies the transmission ratio obtained by the transmission ratio calculation unit 15c and the final reduction ratio to the value resulting from the subtraction of the CVT loss to determine the result as the basic driving wheel torque target value.

As described above, the control device 10 includes the driving force target correction unit 15C. The driving force target correction unit 15C corrects the basic driving wheel torque target value to determine the value resulting from the correction as the final driving wheel torque target value. The driving force target correction unit 15C calculates the final driving wheel torque target value from the basic driving wheel torque target value, using a filter function. The filter function in the present example is defined such that the increase speed of the final driving wheel torque target value is smaller than that of the basic driving wheel torque target value, as described with reference to FIG. 4. For example, when the accelerator operation amount increases, the basic driving wheel torque target value increases. The filter function is defined such that the increase speed of the final driving wheel torque target value is smaller than that of the basic driving wheel torque target value in such a case. According to that filter function, it is possible to achieve smooth acceleration of the vehicle.

In order to achieve such change in the final driving wheel torque target value, the transfer function G(s) of the filter function in the present example includes a first-order lag element G1(s) expressed by the expres-

sion below:

$$G1(s) = 1/(T \times s+1)$$

wherein T is a time constant, and s is an operator.

As described with reference to FIG. 4, when the basic driving wheel torque target value increases, the final driving wheel torque target value increases to a value (Tp2 in FIG. 4) higher than the basic driving wheel torque target value (Tp1 in FIG. 4), and thereafter decreases toward the basic driving wheel torque target value. The filter function is defined such that the final driving wheel torque target value changes relative to the basic driving wheel torque target value in the manner described above. According to such a filter function, it is possible to prolong the feeling of acceleration.

In order to achieve such a change in the final driving wheel torque target value, the transfer function G(s) of the filter function in the present example includes a first-order lag element G2(s) expressed by the expression below:

$$G2(s) = (P \times L \times s+1) / (L \times s+1)$$

wherein P is a proportional gain set to a value greater than one, and L is a time constant. G2 (s) can be re-expressed as follows:

$$G2(s) = P-(P-1) / (Ls+1)$$

wherein the term P is a proportional element of the transfer function G(s). Thus, the transfer function G(s) of the filter function is expressed by the expression below.

$$G(s) = G1(s) \times G2(s)$$

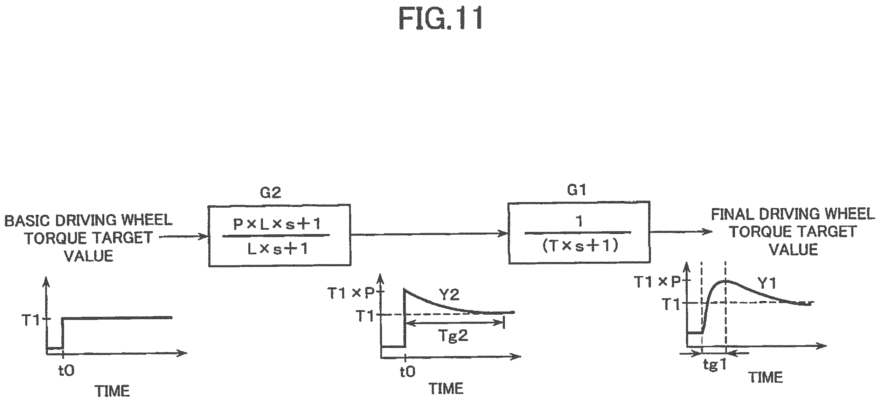

FIG. 11 is a block diagram explaining an example of change in the basic driving wheel torque target value and the final driving wheel torque target value due to the transfer function G(s). In FIG. 11, a step response of the transfer function G(s) is shown as an example. That is, in FIG. 11, an input (a basic driving wheel torque target value) is a step function. The waveform Y2 is an output waveform of the above described element G2 (s) . The waveform Y1 is a waveform of the final driving wheel torque target value.

As indicated by the waveform Y2, when the basic driving wheel torque target value increases to T1 at time t0, an output of the element G2 (s) increases to T1×P at time t0. After time t0, an output of the element G2 (s) decreases moderately toward the basic driving wheel torque target value T1.

As indicated by the waveform Y1, the final driving wheel torque target value increases more moderately at time t0 and thereafter, compared to an output of the element G2(s). That is, the increase speed of the final driving wheel torque target value is smaller than that of the basic driving wheel torque target value. As indicated by the waveform Y1, the final driving wheel torque target value reaches the peak value (T1×P), higher than the basic driving wheel torque target value, with a delay by tg1 from time t0. Thereafter, the final driving wheel torque target value moderately decreases toward the basic driving wheel torque target value T1.

A period of time Tg2 necessary for the value indicated by the output waveform Y2 due to the element G2(s) to become equal to the basic driving wheel torque target value T1 can be adjusted, based on the time constant L of the transfer function G(s). That is, by adjusting the time constant L, it is possible to adjust the period of time with the feeling of acceleration remaining. The ratio of the peak of the final driving wheel torque target value with respect to the basic driving wheel torque target value can be adjusted, based on the proportional gain P of the transfer function G(s). Thus, by adjusting the proportional gain P, it is possible to adjust the acceleration capability. A delay time tg1 necessary for the final driving wheel torque target value to reach the peak value (T1×P) can be adjusted, based on the time constant T of the element G1(s).

The filter function is set, based on the transfer function G(s) that achieves such a waveform. That is, the filter function is a function containing the above mentioned P, T, L as coefficients. Note that, T, L, P may be changed, based on the driving state of the vehicle. For example, at the time of shifting of the transmission, the time constant T may be changed to a value smaller than a standard value. For example, the time constant T may be set, based on the difference between the final target engine rotation speed and the current engine rotation speed, so as to become smaller at the time of shifting. The proportional gain P may be set, based on the accelerator operation amount or the basic engine torque target value, such that the gain P increases at the time of acceleration.

As shown in FIG. 5, the driving force target correction unit 15C in the present example includes a correction condition determination unit 15d. The correction condition determination unit 15d determines whether or not an acceleration request from a user satisfies a condition (hereinafter referred to as a correction condition) for making correction by the driving force target correction unit 15C (that is, the correction is the calculation using the above described filter function). For example, the correction condition determination unit 15d determines whether or not the acceleration request is higher than a predetermined degree, based on the accelerator operation amount detected by the accelerator sensor 24. Specifically, the correction condition determination unit 15d determines whether or not the accelerator operation amount is higher than a predetermined threshold (hereinafter referred to as a first operation amount threshold). The correction condition determination unit 15d determines whether or not the change speed of the accelerator operation amount is higher than a predetermined threshold (hereinafter referred to as a change speed threshold) . In the case where the accelerator operation amount is higher than the first operation amount threshold and the change speed of the accelerator operation amount is higher than the change speed threshold, the correction condition determination unit 15d determines that the acceleration request satisfies the correction condition.

When the acceleration request becomes lower than a predetermined degree, the correction condition determination unit 15d determines that the acceleration request no longer satisfies the correction condition. For example, the correction condition determination unit 15d determines whether or not the accelerator operation amount is lower than a predetermined threshold (hereinafter referred to as a second operation amount threshold) . When the accelerator operation amount becomes lower than the second operation amount threshold, the correction condition determination unit 15d determines that the acceleration request becomes no longer satisfying the acceleration correction condition.

When the comfortable driving mode is selected and the acceleration request by a driver satisfies the correction condition, the driving force target correction unit 15C calculates the final driving wheel torque target value, using the above described filter function. Meanwhile, when the comfortable driving mode is not selected, the driving force target correction unit 15C calculates the basic driving wheel torque target value as the final driving wheel torque target value without using the filter function. Further, when the acceleration request by a driver does not satisfy the correction condition as well, the driving force target correction unit 15C calculates the basic driving wheel torque target value as the final driving wheel torque target value without using the filter function.

According to such processing by the driving force target correction unit 15C, the basic driving wheel torque target value will change as shown in FIG. 4, for example. That is, time t1 in FIG. 4 is a time at which the accelerator operation amount increases and the correction condition is satisfied. Time t3 in FIG. 4 is a time at which the accelerator operation amount decreases and the correction condition becomes no longer satisfied. Before time t1 and after time t3, the basic driving wheel torque target value is equal to the final driving wheel torque target value because the correction using the filter function is not made. Between time t1 and time t3, the final driving wheel torque target value more moderately increase, compared to the basic driving wheel torque target value. And then, once having reached the peak value Tp2, the final driving wheel torque target value becomes gradually closer to the basic driving wheel torque target value. Further, the peak value Tp2 of the final driving wheel torque target value is higher by an amount in accordance with the proportional gain P, compared to the peak value Tp1 of the basic driving wheel torque target value.

A time when the filter function is used is not limited to the above described. For example, the filter function may be used in the normal mode or the fuel efficiency mode as well. In that case, the time constants T, L, and the proportional gain P may be set in accordance with the mode. Further, the correction using the filter function may be executed at the time of deceleration. In that case, the proportional gain P may be less than one. In the case where low speed running continues for a long time, such as running in a city area, the proportional gain P may be less than one.

The target throttle opening degree calculation unit 18 calculates the target throttle opening degree, based on the final driving wheel torque target value. The driving force target calculation unit 15 in the present example includes the inverse conversion unit 15D, as described above. The inverse conversion unit 15D converts the final driving wheel torque target value into the engine torque target value (hereinafter referred to as a final engine torque target value) for use by the target throttle opening degree calculation unit 18. In the present example, the final engine torque target value is an engine torque to be targeted. The target throttle opening degree calculation unit 18 calculates the target throttle opening degree, based on the final engine torque target value.

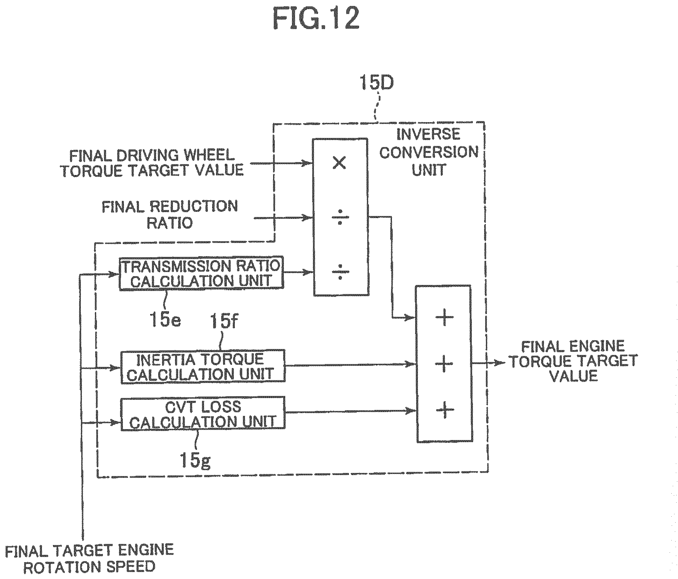

The inverse conversion unit 15D converts the final driving wheel torque target value into the final engine torque target value, based on the final target engine rotation speed. FIG. 12 is a block diagram showing functions of the inverse conversion unit 15D. As shown in FIG. 12, the inverse conversion unit 15D includes transmission ratio calculation unit 15e, an inertia torque calculation unit 15f, and a CVT loss calculation unit 15g, similar to the conversion unit 15B.

The inverse conversion unit 15D executes an operation opposite from that which is executed by the conversion unit 15 to calculate the final engine torque target value from the final driving wheel torque target value. In detail, the inverse conversion unit 15D initially calculates a target value of the torque upstream the CVT 5 from the final driving wheel torque target value, based on the transmission ratio of the CVT 5 and the final reduction ratio. For example, the inverse conversion unit 15D divides the final driving wheel torque target value by the transmission ratio of the CVT 5 and the final reduction ratio to determine the divisional result as the target value of the torque upstream the CVT 5. The transmission ratio used in the division by the inverse conversion unit 15D is a transmission ratio calculated based on, for example, the final target engine rotation speed and the vehicle speed. That is, the transmission ratio is equal to the transmission ratio calculated by the target transmission ratio calculation unit 13, for example.

The inertia torque calculation unit 15f calculates the inertia torque of the engine 4 generated due to change in the engine rotation speed, similar to the inertia torque calculation unit 15a. The inertia torque calculation unit 15f in the present example calculates an inertia torque, based on the final target engine rotation speed. Specifically, the inertia torque calculation unit 15f calculates an inertia torque, based on the change speed of the final target engine rotation speed and an inertia moment of the mechanism (the crank shaft and the piston) upstream the CVT 5 (inertia torque = inertia moment × change speed of the final target engine rotation speed). Note that a method for calculating an inertia torque is not limited to the above described. For example, the inertia torque calculation unit 15f may calculate an inertia torque, based on the change speed of the transmission ratio, similar to the inertia torque calculation unit 15a.

The CVT loss calculation unit 15g calculates the CVT loss, based on, for example, the final target engine rotation speed, the rotation speed of the output shaft detected by the output shaft rotation sensor 26, and the torque transmitted via the CVT 5 (the torque outputted from the engine 4).

The inverse conversion unit 15D calculates the final engine torque target value, based on the target value of the torque of the mechanism upstream the CVT 5, obtained by the above described division, the inertia torque calculated by the inertia torque calculation unit 15f, and the CVT loss calculated by the CVT loss calculation unit 15g. Specifically, the inverse conversion unit 15D adds the inertia torque calculated by the inertia torque calculation unit 15f and the CVT loss calculated by the CVT loss calculation unit 15g to the target value of the torque of the mechanism upstream the CVT 5 to determine the result of the addition as the final engine torque target value.

The target throttle opening degree calculation unit 18 calculates the target throttle opening degree, based on the final engine torque target value and the final target engine rotation speed. Processing by the target throttle opening degree calculation unit 18 is executed as described below, for example.

The memory 10c has second output characteristic information stored therein in advance which is defined based on the output characteristic of the engine 4. The second output characteristic information is information indicating a relationship between, for example, the throttle opening degree, the engine rotation speed, and the engine torque, similar to the first output characteristic information. In the example described here, a map for correlating the throttle opening degree, the engine rotation speed, and the engine torque is stored in the memory 10c (this map will be hereinafter referred to as a second engine torque map). With reference to the second engine torque map, the target throttle opening degree calculation unit 18 calculates, as the target throttle opening degree, a throttle opening degree corresponding to the final engine torque target value and the final target engine rotation speed to determine the throttle opening degree. The final engine torque target value in the present example is a final target value as to the engine torque. In the case where the final engine torque target value is a target value as to the engine power, the second output characteristic information may be a map or a relationship expression for correlating the throttle opening degree, the engine rotation speed, and the engine power.

The above described respective function units of the control device 10 operate as follows in the three respective control modes.

Initially, the normal mode will be described. As described above, in the normal mode, correction by the rotation speed correction unit 11B is not executed. Thus, the basic target engine rotation speed calculated by the basic rotation speed calculation unit 11A is set as the final target engine rotation speed. With reference to FIG. 3, the basic rotation speed calculation unit 11A calculates, as the basic target engine rotation speed, an engine rotation speed N1 in accordance with the accelerator operation amount. The engine rotation speed N1 is set as the final target engine rotation speed. The target transmission ratio calculation unit 13 calculates the target transmission ratio, based on the final target engine rotation speed. In the example described here, the correction using the filter function by the driving force target correction unit 15C is not executed in the normal mode. Thus, the basic engine torque target value calculated by the basic engine torque target calculation unit 15A becomes resultantly equal to the final engine torque target value calculated by the inverse conversion unit 15D. As a result, the target throttle opening degree calculated by the target throttle opening degree calculation unit 18 becomes equal to the basic throttle opening degree calculated by the angle conversion unit 14. With reference to FIG. 3, the throttle opening degree Th1 is set as the target throttle opening degree.

With reference to FIG. 3, the fuel efficiency mode will be described. Similar to the normal mode, the basic rotation speed calculation unit 11A calculates the basic target engine rotation speed N1, based on the accelerator operation amount. The rotation speed correction unit 11B makes the correction for displacing the target engine rotation speed from the basic target engine rotation speed N1 so as to be closer to the engine rotation speed N3, which is an engine rotation speed at a driving point on the optimum fuel efficiency curve A, to determine the resultant engine rotation speed (N2 in FIG. 3) as the final target engine rotation speed. The target transmission ratio calculation unit 13 calculates the target transmission ratio, based on the final target engine rotation speed N2. Meanwhile, the driving force target calculation unit 15 calculates the rear wheel torque (a basic driving wheel torque target value) at the driving point P1 with the basic target engine rotation speed N1 through the processing by the basic engine torque target calculation unit 15A and the conversion unit 15B. In the fuel efficiency mode, the correction as to the driving wheel torque target value by the driving force target correction unit 15C is not executed. Thus, the target throttle opening degree calculation unit 18 calculates the target throttle opening degree, based on the final driving wheel torque target value equal to the basic driving wheel torque target value (in detail, the final engine torque target value calculated by the inverse conversion unit 15D) and the final target engine rotation speed. That is, the target throttle opening degree calculation unit 18 sets, as the target throttle opening degree, the throttle opening degree (Th2 in FIG. 3) at the driving point P2, where a rear torque equal to the rear torque obtained at the driving point P1 can be obtained and the engine rotation speed is equal to the final target engine rotation speed.

Finally, the comfortable driving mode will be described. In the comfortable driving mode, the correction by the rotation speed correction unit 11B is not executed. Thus, the basic target engine rotation speed N1 calculated by the basic rotation speed calculation unit 11A is set as the final target engine rotation speed. The target transmission ratio calculation unit 13 calculates the target transmission ratio, based on the final target engine rotation speed. Meanwhile, the driving force target calculation unit 15 calculates the basic throttle opening degree (Th1 in FIG. 3) and the rear wheel torque (a basic driving wheel torque target value) at the driving point P1 having the basic target engine rotation speed N1 through the processing by the basic engine torque target calculation unit 15A and the conversion unit 15B. The driving force target correction unit 15C calculates the final driving wheel torque target value from the basic driving wheel torque target value, using the filter function. The target throttle opening degree calculation unit 18 calculates the target throttle opening degree, based on the final engine torque target value obtained from the final driving wheel torque target value through the processing by the inverse conversion unit 15D and the final target engine rotation speed.

As described above, the processing executed by the control device 10 is repetitively executed in a predetermined cycle. Thus, the basic driving wheel torque target value gradually changes over time, following which the final driving wheel torque target value also changes. As shown in FIG. 4, when the acceleration request by a driver satisfies the correction condition, the final driving wheel torque target value changes more moderately than the basic driving wheel torque target value. In the case where the final driving wheel torque target value changes over time, the target throttle opening degree calculation unit 18 calculates the target throttle opening degree, based on the final driving wheel torque target value and the final target engine rotation speed obtained at each point of time. With the above, the target throttle opening degree changes in accordance with the final driving wheel torque target value.

As described above, the first engine torque map and the second engine torque map are stored as the output characteristic information in the memory 10c. The throttle opening degree, the engine rotation speed, and the engine torque set in the first engine torque map may have values which are preferable in achieving a comfortable riding, rather than values defined based on the actual output characteristic of the engine 4. Meanwhile, the throttle opening degree, the engine rotation speed, and the engine torque set in the second engine torque map may be closer to the actual output characteristic of the engine 4, compared to the first engine torque map.

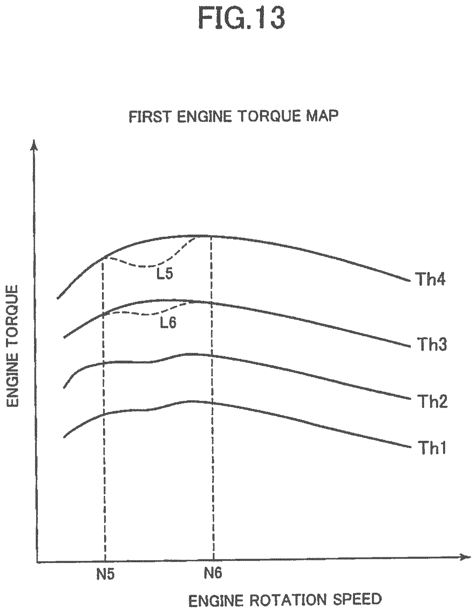

FIG. 13 shows an example of the first engine torque map in this embodiment. As shown in the diagram, for example, the actual output characteristic of the engine 4 (the broken lines L5, L6) has a valley between the engine rotation speeds N5 and N6. The engine torque defined in the first engine torque map increases moderately between the engine rotation speeds N5 and N6, being displaced from the valley. Meanwhile, the throttle opening degree, the engine rotation speed, and the engine torque set in the second engine torque map take values defined based on the actual output characteristic of the engine 4. That is, the engine torque defined in the second engine torque map has a valley between the engine rotation speeds N5 and N6.

Due to such a difference between the two engine torque maps, it is possible to achieve a comfortable riding, without relying on the actual output characteristic of the engine 4. For example, when the engine 4 is driven at the engine rotation speed corresponding to the valley of the engine torque, the basic engine torque target value calculated with reference to the first engine torque map results in a higher value than the engine torque defined based on the actual output characteristic of the engine 4. The final engine torque target value is calculated based on this high basic engine torque target value. Then, the target throttle opening degree is set such that a torque at the final engine torque target value can be obtained. That is, such a difference between these two engine torque maps makes it possible to achieve output characteristics having a torque carve that is more desirable than that which is defined based on the actual output characteristic of the engine 4.

As described above, the conversion unit 15B calculates the basic driving wheel torque target value from the basic engine torque target value, using the inertia torque calculated by the inertia torque calculation unit 15a. The inverse conversion unit 15D calculates the final engine torque target value from the final driving wheel torque target value, using the inertia torque calculated by the inertia torque calculation unit 15f. However, the conversion unit 15B may calculate the basic driving wheel torque target value from the basic engine torque target value, without using the inertia torque. Then, the inverse conversion unit 15D may calculate the final engine torque target value, based on the final driving wheel torque target value and the inertia torque, similar to the example shown in FIG. 12.

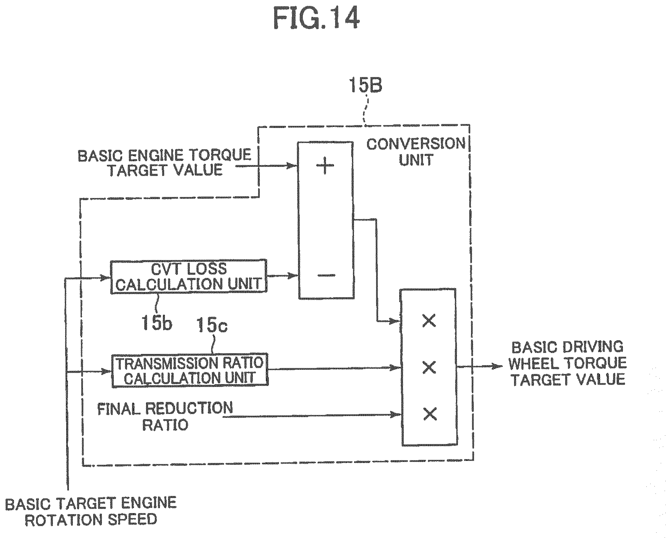

FIG. 14 is a block diagram showing processing by the conversion unit 15B in this embodiment. As shown in the diagram, the conversion unit 15B in this embodiment includes the CVT loss calculation unit 15b and the transmission ratio calculation unit 15c, but not the inertia torque calculation unit 15a. Thus, in the calculation of the basic driving wheel torque target value from the basic engine torque target value, no inertia torque is subtracted. Meanwhile, in the processing by the inverse conversion unit 15D, an inertia torque is added in calculation of the final engine torque target value, as shown in FIG. 12. With the above, it is possible to obtain an engine torque for compensating for the torque that is lost due to variation of the engine rotation speed at the time of acceleration of the vehicle, which can improve acceleration capability.

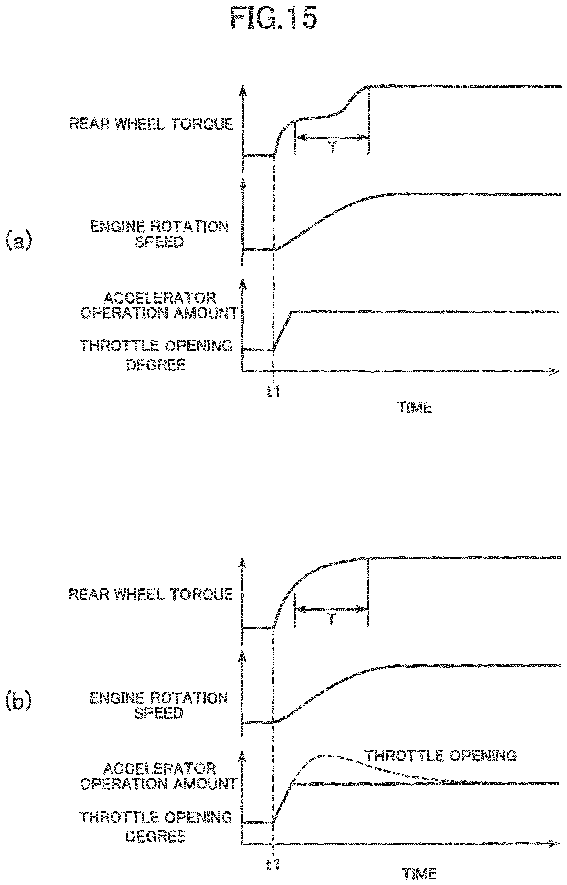

FIG. 15 is a time chart for explaining an effect of the embodiment in which only the inverse conversion unit 15D uses an inertia torque. FIG. 15(a) is a time chart according to the embodiment in which both of the conversion unit 15B and the inverse conversion unit 15D use an inertia torque; FIG. 15(b) is a time chart according to the embodiment in which only the inverse conversion unit 15D uses an inertia torque. FIGs. 15 (a) and 15(b) show change in the accelerator operation amount, the throttle opening degree, the engine rotation speed, and the rear wheel. torque.

In FIG. 15(a), the accelerator operation amount increases at time t1, following which the throttle opening degree as well increases. In the present example, the throttle opening degree changes similar to the accelerator operation amount. The engine rotation speed starts increasing at time t1 due to increase of the throttle opening degree. The rear wheel torque starts increasing at time t1 due to increase of the throttle opening degree. However, increase of the rear wheel torque is hindered during the period T as the torque of the engine 4 is partially consumed in order for the engine rotation speed to increase.

In FIG. 15(b) as well, similar to FIG. 15(a), the accelerator operation amount increases at time t1, following which the throttle opening degree as well increases. The engine rotation speed starts increasing at time t1 due to increase of the throttle opening degree. In the embodiment in which the inertia torque is used only in processing by the inverse conversion unit 15D, the target throttle opening degree is set so as to compensate for the torque (inertia torque) consumed in order for the engine rotation speed to increase. Thus, as shown in FIG. 15(b), the throttle opening degree increases more largely, compared to the accelerator operation amount, during a period with the engine rotation speed increasing. As a result, increase of the rear wheel torque is not hindered during the period with the engine rotation speed increasing. This resultantly improves the acceleration capability of the vehicle.

The control device 10 may correct the driving force target value, based on the running load applied to the vehicle when the vehicle is running.

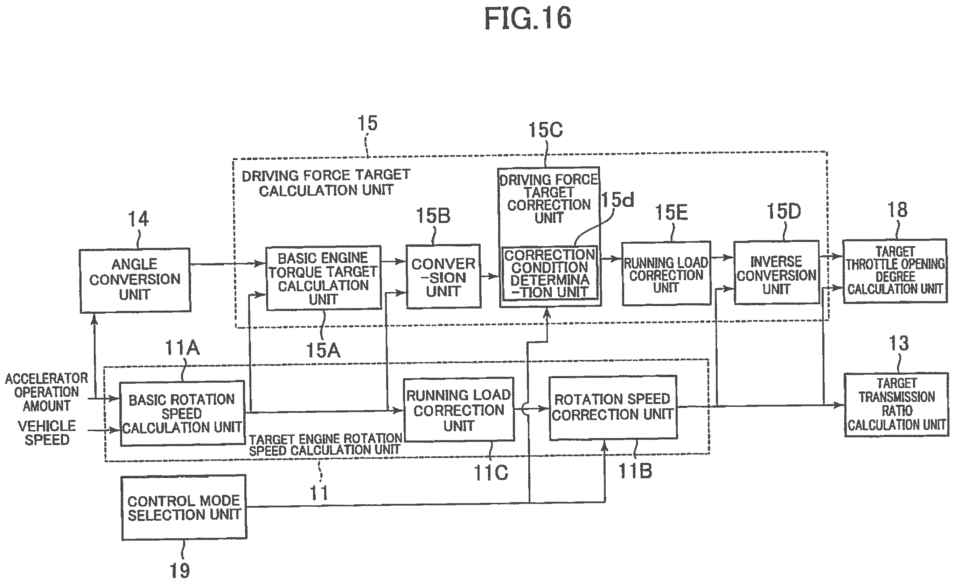

FIG. 16 is a block diagram showing functions of the control device 10 in that embodiment. As shown in FIG. 16, in the embodiment, the driving force target calculation unit 15 includes a running load correction unit 15E. The running load correction unit 15E corrects the driving force target value, based on a running load applied to the vehicle. In the present example, the running load correction unit 15E further corrects the final driving force target value calculated by the driving force target correction unit 15C. The inverse conversion unit 15D calculates the final engine torque target value, based on the final driving force target value corrected by the running load correction unit 15E. The running load is a load applied to the vehicle because of, for example a rider, a burden mounted on the vehicle, the gradient of a road where the vehicle runs, and so forth. The running load correction unit 15E estimates a running load applied to the vehicle in processing described below, for example.

The memory 10c has information which indicates a relationship between the driving force target value (for example, the rear wheel torque) in a state where a reference running load is applied to a vehicle and the acceleration of the vehicle (hereinafter referred to as first basic acceleration information). The reference running load is a load applied to a vehicle, for example, when a rider having a standard weight is riding on the vehicle and the vehicle is running on a plane road. That is, the first basic acceleration information is information indicating a relationship between the driving force target value and the acceleration of a vehicle when a rider having a standard weight rides on the vehicle and the vehicle is running on a plane road. The first basic acceleration information is a map or a relational expression for correlating the driving force target value and the acceleration of a vehicle, for example. The running load correction unit 15E calculates the actual acceleration of the vehicle, based on an output from the vehicle speed sensor 27 when the vehicle is running. With reference to the first basic acceleration information, the running load correction unit 15E calculates an acceleration corresponding to the final driving force target value calculated by the driving force target correction unit 15C (the acceleration calculated in the processing will be hereinafter referred to as a first basic acceleration). The running load correction unit 15E calculates the difference between the actual acceleration and the first basic acceleration (hereinafter referred to as a first acceleration difference) as the difference between the running load applied under standard running and a running load applied under current running. Then, based on the first acceleration difference, the running load correction unit 15E corrects the final driving force target value calculated by the driving force target correction unit 15C. For example, the running load correction unit 15E adds a correction amount in accordance with the first acceleration difference to, or subtracts the correction amount from, the final driving force target value calculated by the driving force target correction unit 15C. The running load correction unit 15E may multiply a coefficient in accordance with the first acceleration difference to the final driving force target value calculated by the driving force target correction unit 15C. In the embodiment including such processing, the memory 10c has, in advance, a map or a relational expression for correlating the first acceleration difference and the correction amount or a map or a relational expression for correlating the first acceleration difference and a coefficient.

In the embodiment shown in FIG. 16, the target engine rotation speed calculation unit 11 includes a running load correction unit 11C. The running load correction unit 11C corrects the target engine rotation speed, based on the running load applied to the vehicle. In that example, the running load correction unit 11C corrects the basic engine rotation speed calculated by the basic rotation speed calculation unit 11A. The above described rotation speed correction unit 11B calculates the final engine rotation speed, based on the basic engine rotation speed corrected by the running load correction unit 11C. In the present example, the basic engine torque target calculation unit 15A and the conversion unit 15B execute the above described processing, based on the basic engine rotation speed before the correction conducted by the running load correction unit 11C.

The running load correction unit 11C estimates the running load, similar to the above described running load correction unit 15E, for example. That is, the memory 10c has, in advance, information indicating a relationship between the target engine rotation speed and the vehicle acceleration in a state where a reference load is applied to the vehicle (hereinafter the information is referred to as a second basic acceleration information). The reference load is similar to the above described, and the second basic acceleration information defines a relationship between the engine rotation speed and the acceleration of a vehicle when a rider having a standard weight is riding on the vehicle and the vehicle is running on a plane road. The second basic acceleration information is a map or a relational expression for correlating, for example, the engine rotation speed and the acceleration of a vehicle. The running load correction unit 11C calculates the actual acceleration of a vehicle, based on an output from the vehicle speed sensor 27, while the vehicle is running. The calculation of the actual acceleration is executed by either one of the running load correction unit 11C and the above described running load correction unit 15E, and the actual acceleration obtained by the one may be used by the other. With reference to the second basic acceleration information, the running load correction unit 11C calculates an acceleration corresponding to the basic target engine rotation speed calculated by the basic rotation speed calculation unit 11A (the acceleration calculated in this processing will be hereinafter referred to as a second basic acceleration). The running load correction unit 11C calculates the difference (hereinafter referred to as a second acceleration difference) between the actual acceleration and the second basic acceleration as a running load applied to the vehicle. Then, based on the second acceleration difference, the running load correction unit 11C corrects the basic target engine rotation speed calculated by the basic rotation speed calculation unit 11A. For example, the running load correction unit 11C adds a correction amount in accordance with the second acceleration difference to, or subtracts the correction amount from, the basic target engine rotation speed calculated by the basic rotation speed calculation unit 11A. The running load correction unit 11C may multiply a coefficient in accordance with the second acceleration difference to the basic target engine rotation speed calculated by the basic rotation speed calculation unit 11A. In the embodiment including such processing, the memory 10c has, in advance, a map or a relational expression for correlating the second acceleration difference and a correction amount or a map or a relational expression for correlating the second acceleration difference and a coefficient.

As described above, as the target engine rotation speed calculation unit 11 and the driving force target calculation unit 15 include the running load correction unit 11C and the running load correction unit 15E, respectively, it is possible to increase the freedom relevant to a correction amount and a correction method based on a running load applied to a vehicle.

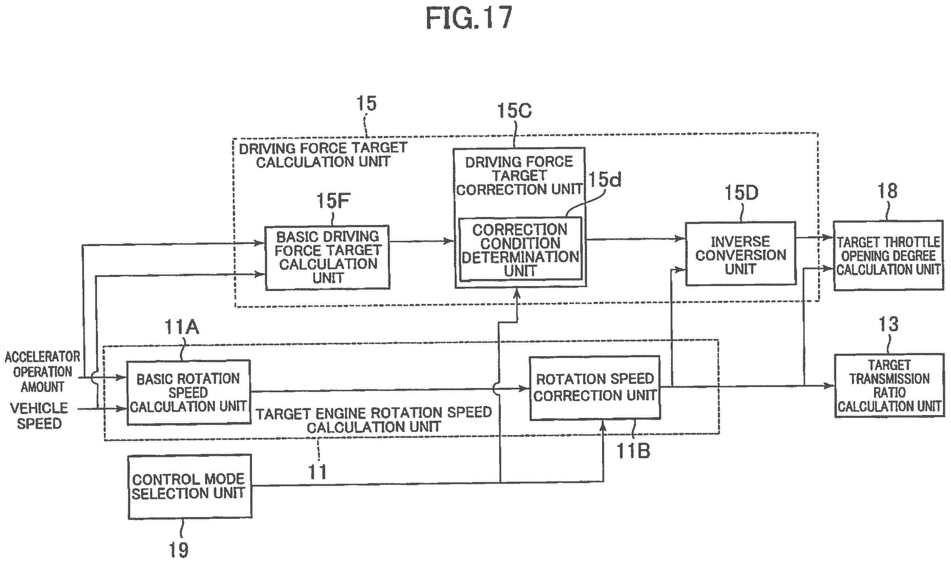

The above described control device 10 includes the basic engine torque target calculation unit 15A and the conversion unit 15B. That is, the control device 10 calculates the basic engine torque target value, using the first engine torque map, and thereafter converts into the basic driving force target value, using the basic target engine rotation speed. However, the control device 10 may directly calculate the basic driving force target value, based on the accelerator operation amount and the vehicle speed. FIG. 17 is a block diagram showing a function of the control device 10 according to this embodiment.

The control device 10 shown in this diagram includes a basic driving force target calculation unit 15F, instead of the basic engine torque target calculation unit 15A and the conversion unit 15B. The memory 10c has a map or a relational expression for correlating the accelerator operation amount, the vehicle speed, and the driving force target value (for example, a target value of the rear wheel torque) . Using the map or relational expression, the basic driving force target calculation unit 15F calculates, as the basic driving force target value, a driving force target value corresponding to the accelerator operation amount and the vehicle speed detected by the respective sensors.

As described above, the engine rotation speed map for correlating the accelerator operation amount and the engine rotation speed is stored in the memory 10c. With reference to the engine rotation speed map, the target engine rotation speed calculation unit 11 calculates, as the target engine rotation speed, an engine rotation speed corresponding to the accelerator operation amount detected by the accelerator sensor 24, and the target transmission ratio calculation unit 13 calculates a target transmission ratio, based on the target engine rotation speed. Further, based on the target engine rotation speed, the driving force target calculation unit 15 calculates a driving force target value (an engine torque target value and a driving wheel torque target value), which is a target value concerning the driving force of the vehicle, and the target throttle opening degree calculation unit 18 calculates a target throttle opening degree, based on the driving force target value. With the above, because the target transmission ratio and the target throttle opening degree are calculated, using a target engine rotation speed in accordance with the accelerator operation amount as a base, it is possible to readily set the engine rotation speed to a rotation speed that can achieve a comfortable riding in accordance with the accelerator operation by a driver.

The target engine rotation speed calculation unit 11 calculates, as the target engine rotation speed, an engine rotation speed higher than the engine rotation speed that optimizes the fuel efficiency. With the above, it is possible to improve acceleration responsiveness of a vehicle.

The driving force target calculation unit 15 calculates the basic driving force target value, based on the target engine rotation speed, and then corrects the basic driving force target value to determine the value resulting from the correction as the final driving force target value. The target throttle opening degree calculation unit 18 calculates the target throttle opening degree, based on the final driving force target value. According to the above, it is possible to correct the driving force target value when necessary to improve acceleration capability of a vehicle.

The driving force target calculation unit 15 calculates the final driving force target value from the basic driving force target value, using the filter function. According to the above, it is possible to achieve desirable change in the final driving force target value relative to the basic driving force target value.

The filter function is defined such that the increase speed of the final driving force target value is smaller than that of the basic driving force target value. According to the above, it is possible to achieve smooth acceleration and/or deceleration.

The filter is defined such that the final driving force target value increases to a value higher than the basic driving force target value and thereafter decreases toward the basic driving force target value when the basic driving force target value increases. According to the above, it is possible to improve the acceleration capability and also to prolong the feeling of acceleration.

The transfer function of the filter function includes a first-order lag element. According to the above, it is possible to achieve smooth acceleration and/or deceleration.

The transfer function of the filter function includes a proportional element. According to the above, it is possible to improve the acceleration capability.

The driving force target calculation unit 15 calculates the engine torque target value, based on the target engine rotation speed, and calculates the driving wheel torque target value, based on the engine torque target value and the inertia torque generated due to change in the engine rotation speed. Then, the target throttle opening degree calculation unit 18 calculates the target throttle opening degree, based on the driving wheel torque target value. According to the above, it is possible to set a target throttle opening degree that compensates for the loss of the driving force due to generation of the inertia torque.

The target engine rotation speed calculation unit 11 calculates an engine rotation speed in accordance with the accelerator operation amount detected by the accelerator sensor 24 as the basic target engine rotation speed. The rotation speed correction unit 11B corrects the basic target engine rotation speed to determine the rotation speed resulting from the correction as the final target engine rotation speed. The target transmission ratio calculation unit 13 calculates the target transmission ratio such that the actual engine rotation speed becomes equal to the final target engine rotation speed. The driving force target calculation unit 15 calculates the driving force target value, which is a target value as to the driving force of a vehicle (that is, the engine torque target value or the rear wheel torque target), based on the basic target engine rotation speed. The target throttle opening degree calculation unit 18 calculates the target throttle opening degree, based on the driving force target value, based on the basic target engine rotation speed.

According to the above described control, the driving force target value and the target throttle opening degree are calculated, based on the basic target engine rotation speed in accordance with the accelerator operation amount. This makes it easier to set the engine rotation speed to a rotation speed that can achieve a comfortable riding in accordance with the acceleration operation by a driver. The driving force target value is calculated based on the basic target engine rotation speed, and the target throttle opening degree is calculated based on the final target engine rotation speed and the driving force target value based on the basic target engine rotation speed. Thus, even in the case where the final target engine rotation speed is a value resulting from the correction of the basic target engine rotation speed, it is possible to set the target throttle opening degree such that the driving force of the vehicle is maintained.

The driving force target calculation unit 15 calculates the driving force target value, based on the basic throttle opening degree converted from the accelerator operation value detected and the basic target engine rotation speed, with reference to the first engine torque map, that is, the output characteristic information. The target throttle opening degree calculation unit 18 calculates the target throttle opening degree, based on the driving force target value and the final target engine rotation speed, with reference to the second engine torque map, that is, the output characteristic information. This facilitates calculation of an appropriate target throttle opening degree.

The first engine torque map and the second engine torque map which is different from the first engine torque map are stored as the output characteristic information in the memory 10c. The relationship between the throttle opening degree, the engine rotation speed, and the engine torque, defined in the second engine torque map, is closer to the actual output characteristic of the engine, compared to that defined in the first engine torque map. According to the above, it is possible to achieve more desirable output characteristic than the actual output characteristic of the engine 4, utilizing the difference between the first engine torque map and the second engine torque map.

The target throttle opening degree calculation unit 18 calculates the target throttle opening degree, based on the driving force target value and the inertia torque of the engine 4 due to change in the engine rotation speed. According to the above, it is possible to set a target throttle opening degree that compensates for the loss of the driving force due to generation of the inertia torque.

The driving force target calculation unit 15 calculates the engine torque target value (that is, a target value as to the engine torque), and the driving wheel torque target value (that is, a target value as to the torque of the rear wheel 8), as the driving force target value. The driving force target correction unit 15C corrects the basic driving wheel torque target value to thereby determine the target value resulting from the correction as the final driving wheel torque target value. The target throttle opening degree calculation unit 18 calculates the target throttle opening degree, based on the final engine torque target value based on the final driving wheel torque target value. According to the above, it is possible to make correction more desirable in view of the sense of riding, compared to a case in which a target value as to the engine torque is corrected.

According to an embodiment, the conversion unit 15B calculates the basic driving wheel torque target value from the basic engine torque target value, without using the inertia torque, and the inverse conversion unit 15D calculates the final engine torque target value, based on the final driving wheel torque target value and the inertia torque. According to the above, it is possible to set a target throttle opening degree that compensates for the loss of the driving force due to generation of the inertia torque.

The present teaching is not limited to the control by the above described control device 10, and various modifications are possible.

For example, instead of the first engine torque map and the second engine torque map, a map for correlating the throttle opening degree, the engine rotation speed, and the engine power may be used as the output characteristic information.

In calculation of the final engine torque target value, the CVT loss may not be necessarily used.

The basic engine torque target value may be corrected, and then the value resulting from the correction may be used as the final engine torque target value.

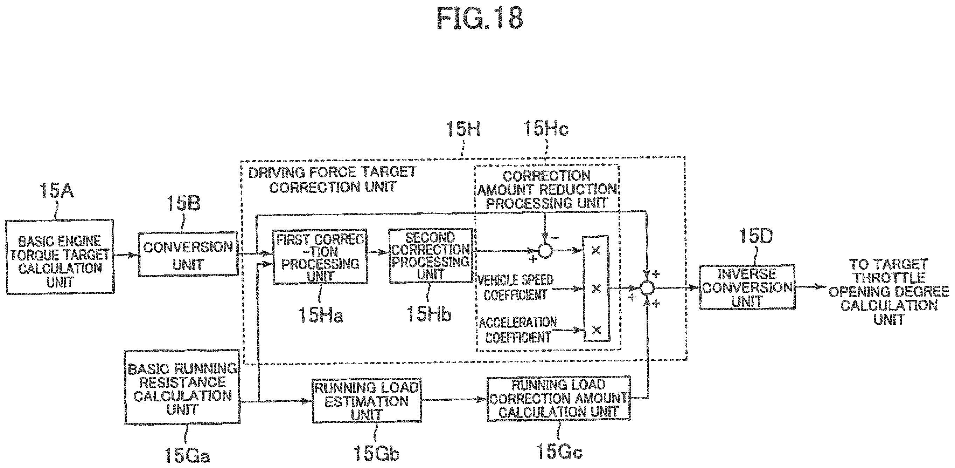

FIG. 18 is a block diagram showing a modified example of the processing executed by the driving force target calculation unit 15. The driving force target calculation unit 15 in the present example includes a basic running resistance calculation unit 15Ga, a running load estimation unit 15Gb, and a running load correction amount calculation unit 15G. The driving force target calculation unit 15 additionally includes a driving force target correction unit 15H.

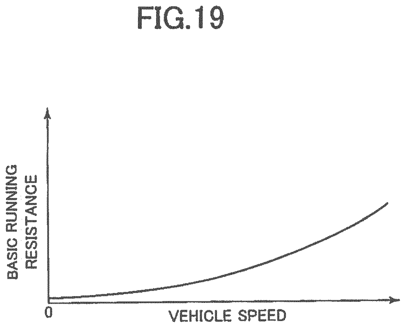

The basic running resistance calculation unit 15Ga calculates a basic running resistance which is a running resistance received when the vehicle is running at a constant speed. The basic running resistance is mainly due to the air resistance received when the vehicle is running, and changes in accordance with the vehicle speed. Thus, the basic running resistance calculation unit 15Ga calculates the basic running resistance, based on the vehicle speed detected by the vehicle speed sensor 27. For example, basic information for correlating the basic running resistance and the vehicle speed is stored in advance in the memory 10c (the basic information is a map, for example, which will be hereinafter referred to as a running resistance map). FIG. 19 shows an example of a relationship between the basic running resistance and the vehicle speed. In FIG. 19, the abscissa indicates the vehicle speed, and the ordinate indicates the basic running resistance. As shown in FIG. 19, the basic running resistance generally increases as the vehicle speed increases. The basic running resistance calculation unit 15Ga calculates a basic running resistance in accordance with the vehicle speed detected by the vehicle speed sensor 27, using a map or a relational expression for defining such a relationship between the basic running resistance and the vehicle speed. In the example in the present description, the basic running resistance is used in correction to the driving wheel torque target value, as to be described in detail later. Thus, the basic running resistance is a value at the same dimension as that of the driving wheel torque target value. That is, in a case where the driving wheel torque target value is a target value as to the rear wheel torque, the basic running resistance has the dimension of torque. In the case where the driving wheel torque target value is a target value of an output (a power) of the rear wheel 8, the basic running resistance has the dimension of power.

When the vehicle is running on a slope, a running load in excess of the basic running resistance is applied to the vehicle. The running load estimation unit 15 GB estimates such a running load in excess of the basic running resistance. The processing by the running load estimation unit 15 GB is executed as follows, for example.

Assuming the acceleration of a vehicle as "a", the weight of the vehicle as "M", the engine torque as "Teg", the inertia torque of the engine 4 as "Ti", the above described CVT loss as "Tloss", and all running loads applied to the vehicle (including the basic running resistance) as "Lv", these hold the relationship mentioned below:

$$\text{Teg-Ti-Tloss-Lv} = \text{M} \times \text{a}$$

With reference to the engine torque map (for example, the engine torque map shown in FIG. 9), the engine torque Teg can be calculated, based on the engine rotation speed and the throttle opening degree. As described above, the inertia torque Ti is a value obtained by multiplying the change speed of the engine rotation speed and the inertia moment of the mechanism (the crank shaft and the piston of the engine 4) upstream the CVT 5. The CVT loss Tloss is a loss based on the engine rotation speed, the rotation speed of the output shaft of the CVT 5, and the torque (the engine torque) transmitted via the CVT 5. Then, the running load estimation unit 15Gb calculates the all running loads Lv, using the above described relational expression, based on, for example, the engine torque Teg, the engine rotation speed, the rotation speed of the output shaft of the CVT 5, and the vehicle speed. The engine rotation speed used in this calculation may be the actual engine rotation speed detected by the engine rotation speed sensor 21 or the engine rotation speed used in this calculation may be the basic target engine rotation speed. The throttle opening degree used in calculation of the engine torque Teg may be the actual throttle opening degree detected by the throttle opening degree sensor 22 or the target throttle opening degree calculated in the previous processing. The vehicle speed used in calculation of the acceleration of the vehicle is the vehicle speed detected by the vehicle speed sensor 27, and the rotation speed of the output shaft of the CVT 5 is the rotation speed detected by the output shaft rotation sensor 26. The running load estimation unit 15GB calculates, as the running load, a value by subtracting the basic running resistance calculated by the basic running resistance calculation unit 15Ga from the all running loads Lv. The running load generally takes a positive value when the vehicle is running on an ascending slope, and a negative value when the vehicle is running on a descending slope. The processing for calculating the all running loads is not limited to the above described. For example, the CVT loss Tloss is not necessarily taken into consideration.

The running load correction amount calculation unit 15G calculates a correction amount as to the target value of the driving force of the vehicle, based on the running load calculated by the running load estimation unit 15Gb. The running load correction amount calculation unit 15G in the present example described here calculates a correction amount as to the driving wheel torque target value. The driving wheel torque target value is a rear wheel torque to be targeted or a rear wheel power to be targeted (rear wheel torque × rotation speed of the rear wheel 8), as described above. As to be descried later, the correction amount calculated by the running load correction amount calculation unit 15G is added to the driving wheel torque target value.

The running load is estimated, based on the vehicle speed and the engine rotation speed, as described above. However, it is difficult to achieve the estimation with high accuracy. That is, there is a case in which the running load calculated by the running load estimation unit 15Gb is different from that related to the gradient of the slope where the vehicle is actually running. In view of the above, in the example described here, the correction based on the running load may be reduced when the absolute value of the running load is less than a threshold, and the correction in accordance with the running load may be executed when the absolute value of the running load is greater than the threshold.

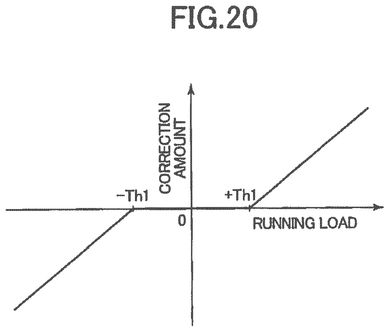

FIG. 20 shows an example of a relationship between the correction amount calculated by the running load correction amount calculation unit 15G and the running load. In FIG. 20, the abscissa indicates the running load, and the ordinate indicates the correction amount. As shown in FIG. 20, in the case where the running load is between the threshold +Th1 and the threshold -Th1, the correction amount is zero. In the area with the running load greater than the threshold +Th1, the correction amount increases as the running load increases. In the area with the running load less than the threshold -Th1, the correction amount increases in the negative direction as the running load increases in the negative direction. That is, the correction amount that is calculated when the absolute value of the running load is less than the threshold is smaller than the correction amount calculated when the absolute value of the running load is greater than the threshold. The increase rate thereof in accordance with the increase of the running load is kept smaller.

The running load correction amount calculation unit 15G calculates the correction amount, with reference to the basic information (a map or a relational expression) that defines such a relationship between the correction amount and the running load. Using such basic information, the correction based on the running load is reduced when the absolute value of the running load is less than the threshold. The processing by the running load correction amount calculation unit 15G is not limited to the above described. For example, the running load correction amount calculation unit 15G determines whether or not the absolute value of the running load is less than a threshold, and calculation of the correction amount may not be executed when the absolute value is less than the threshold.

The running load correction amount calculation unit 15G calculates the correction amount, based on the vehicle speed, such that the correction for increasing the driving wheel torque target value is reduced when the vehicle speed is equal to or less than a predetermined value. For example, the running load correction amount calculation unit 15G multiplies a coefficient (hereinafter referred to as a vehicle speed coefficient) to the correction amount calculated in accordance with the running load, where the vehicle speed coefficient is defined to decrease in accordance with decreasing of the vehicle speed. With the above, it is possible to prevent increase of the driving force of the vehicle due to the correction when the vehicle speed is low. The running load correction amount calculation unit 15G calculates the correction amount such that the correction for increasing the driving wheel torque target value is reduced when the accelerator operation amount is equal to or less than a predetermined value. For example, the running load correction amount calculation unit 15G multiplies a coefficient (hereinafter referred to as an acceleration coefficient) to the correction amount calculated in accordance with the running load, where the acceleration coefficient is defined to decrease in accordance with decreasing of the acceleration operation amount. With the above, it is possible to prevent increase of the driving force of the vehicle due to correction when a rider operates the accelerator by a reduced amount with an intention of deceleration.

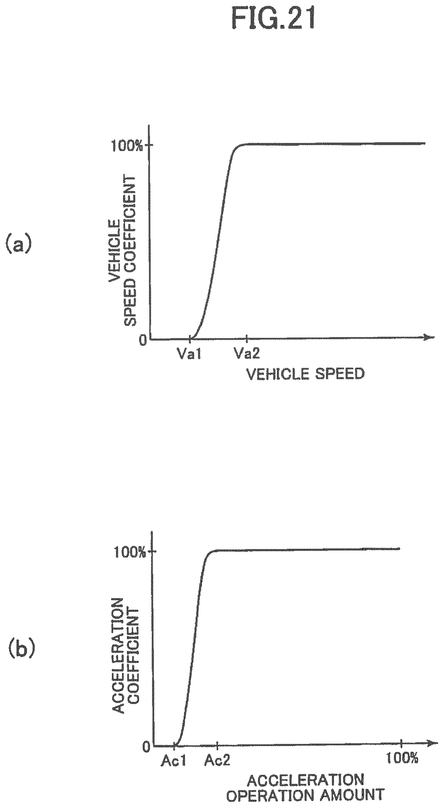

FIG. 21(a) shows an example of a relationship between the vehicle speed and the vehicle speed coefficient. In FIG. 21(a), the abscissa indicates the vehicle speed, and the ordinate indicates the vehicle speed coefficient. In the example shown in FIG. 21(a), the vehicle speed coefficient is 0% in the range with the vehicle speed between 0 and Va1. The vehicle speed coefficient gradually increases in accordance with the increase of the vehicle speed in the range from the vehicle speed Va1 to Va2. The vehicle speed coefficient is 100% in the range with the vehicle speed at Va2 or greater. The running load correction amount calculation unit 15G calculates the vehicle speed coefficient, with reference to the basic information (a map or a relational expression) that defines the relationship between the vehicle speed coefficient and the vehicle speed.

FIG. 21(b) shows an example of a relationship between the accelerator operation amount and the accelerator coefficient. In FIG. 21 (b), the abscissa indicates the accelerator operation amount, and the ordinate indicates the accelerator coefficient. In the example shown in FIG. 21(b), the accelerator coefficient is 0% in the rage with the accelerator operation amount 0% to Ac1. The accelerator coefficient gradually increases in accordance with the accelerator operation amount in the range from the accelerator operation amount Ac1 to Ac2. The accelerator coefficient is 100% in the range at the accelerator operation amount Va2 or greater. The running load correction amount calculation unit 15G calculates the accelerator coefficient, with reference to the basic information (a map or a relational expression) that defines the relationship between the accelerator coefficient and the accelerator operation amount.

The running load correction amount calculation unit 15G determines whether or not the correction amount in accordance with the running load calculated by the running load estimation unit 15 Gb (the correction amount shown as an example in FIG. 20) is a positive value, that is, whether or not the vehicle is running on an ascending slope. When the correction amount in accordance with the running load is a positive value, the running load correction amount calculation unit 15G multiplies the vehicle speed coefficient and the accelerator coefficient to the correction amount calculated from the running load, and then adds the resultant correction amount to the driving wheel torque target value. In the example shown in FIG. 18, the correction amount is added to the driving wheel torque target value corrected by a first correction processing unit 15Ha and a second correction processing unit 15Hb included in the driving force target correction unit 15H. The correction amount may be added to the driving wheel torque target value calculated by the conversion unit 15B, in other words, may be added to the driving wheel torque target value before being subjected to the processing by the first correction processing unit 15Ha and the second correction processing unit 15Hb. Through such processing by the running load correction amount calculation unit 15G, the correction for increasing the driving wheel torque target value is reduced when the vehicle speed is equal to or less than a predetermined value (Va1 in the example shown in FIG. 21 (a)). Further, the correction for increasing the driving wheel torque target value is reduced when the accelerator operation amount is equal to or less than a predetermined value (Ac1 in the example shown in FIG. 21 (b)). The vehicle speed coefficient may be set to 0% when the vehicle speed is zero, and may increase in accordance with the vehicle speed when the vehicle speed is higher than zero. Similarly, the accelerator coefficient is set to 0% when the accelerator operation amount is 0%, and may increase in accordance with the acceleration operation amount when the accelerator operation amount is higher than 0%. In this case as well, the correction for increasing the driving wheel torque target value is reduced when the vehicle speed is zero or the accelerator operation amount is 0%.

The calculation of the correction amount based on the vehicle speed and the accelerator operation amount is not limited to the above described. For example, the running load correction amount calculation unit 15G may determine whether or not the vehicle speed is less than a threshold. And then, when the vehicle speed is less than the threshold, the calculation of the correction amount may not be executed. Alternatively, the running load correction amount calculation unit 15G may determine whether or not the accelerator operation amount is less than a threshold. And then, when the accelerator operation amount is less than the threshold, the calculation of the correction amount may not be executed. Still alternatively, only either one of the vehicle speed coefficient and the accelerator coefficient may be calculated.

The driving force target correction unit 15H multiplies a correction coefficient to the driving wheel torque target value to execute correction processing for increasing the driving wheel torque target value. In an example, the correction processing using this correction coefficient is executed together with the correction using the filter function described with reference to FIG. 11. The correction processing using the correction coefficient may be executed instead of the correction using the filter function. As shown in FIG. 18, the driving force target correction unit 15H has a first correction processing unit 15Ha for executing correction using the above described correction coefficient and a second correction processing unit 15Hb for executing correction using the filter function described with reference to FIG. 11. Although the processing by the first correction processing unit 15Ha is executed before the processing by the second correction processing unit 15Hb in FIG. 18, the order may be opposite. The processing by the second correction processing unit 15Hb is the same as the processing by the driving force target correction unit 15C, described with reference to FIG. 11, and thus not described here.

When the driving wheel torque target value (the basic driving wheel torque target value calculated by the conversion unit 15B in the example shown in FIG. 18) is greater than the basic running resistance (that is, the running resistance received when the vehicle is running at a constant speed), the first correction processing unit 15Ha executes correction using a correction coefficient (the correction coefficient having a value equal to or greater than one). With the above, the correction using the correction coefficient is kept being executed from the start of acceleration of the vehicle until the vehicle reaches running at a constant vehicle speed (hereinafter referred to as steady running), and thus, more comfortable acceleration capability can be obtained. After the vehicle has reached a steady running, as the correction using the correction coefficient is no longer executed, motion of the vehicle comes to be in accordance with an accelerator operation, which makes the steady running more comfortable. The above described correction of the driving wheel torque target value is executed as follows, for example.

In an example, the first correction processing unit 15Ha determines whether or not the driving wheel torque target value is greater than the basic running resistance calculated by the basic running resistance calculation unit 15Ga. In the case where the driving wheel torque target value is greater than the basic running resistance, the first correction processing unit 15Ha multiplies a correction coefficient to the driving wheel torque target value.

In another example, in the case where the driving wheel torque target value is greater than the basic running resistance, the first correction processing unit 15Ha multiplies the correction coefficient to the difference between the basic running resistance and the driving wheel torque target value, and adds the result to the basic running resistance ((driving wheel torque target value - basic running resistance) × correction coefficient + basic running resistance). With the above, because the difference between the basic running resistance and the driving wheel torque target value becomes smaller, that is, because the vehicle is getting closer to steady running, the amount of increase of the driving wheel torque target value due to the correction becomes smaller. As a result, it is possible to prevent sharp drop of the driving force of the vehicle at a moment when the difference between the basic running resistance and the driving wheel torque target value is resolved.

In the driving state with the clutch not fully engaged, that is, when the vehicle is running at a low speed, it is not desirable that the driving force increases due to the correction. In view of the above, when the vehicle speed is equal to or less than a predetermined value, the correction for increasing the driving wheel torque target value by the first correction processing unit 15Ha may be reduced. In order to achieve such reducing of the correction, the first correction processing unit 15Ha multiplies a correction coefficient that changes in accordance with the vehicle speed, for example, to the driving wheel torque target value.

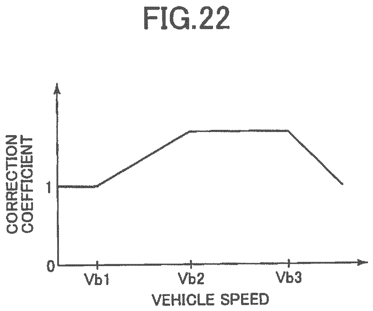

FIG. 22 shows an example of a relationship between the correction coefficient and the vehicle speed. In FIG. 22, the abscissa indicates the vehicle speed, and the ordinate indicates the correction coefficient. In the example shown in FIG. 22, in the area where the vehicle speed is lower than Vb1, the correction coefficient is set to one. In the area where the vehicle speed is from Vb1 to Vb2, the correction coefficient gradually increases; in the area where the vehicle speed is from Vb2 to Vb3, the correction coefficient is a constant value. There is a case in which large increase of the driving force due to the correction is not preferable when the vehicle speed is high. In view of the above, in the example shown in FIG. 22, in the area where the vehicle speed is higher than Vb3, the correction coefficient becomes gradually smaller. Use of such a correction coefficient reduces the correction by the first correction processing unit 15H for increasing the driving wheel torque target value when the vehicle speed is equal to or less than Vb1. When the vehicle speed is equal to or greater than Vb3, the correction by the first correction processing unit 15Ha for increasing the driving wheel torque target value is gradually reduced as the vehicle speed increases. The correction coefficient is not limited to the above described, and may be a constant value regardless of the vehicle speed.

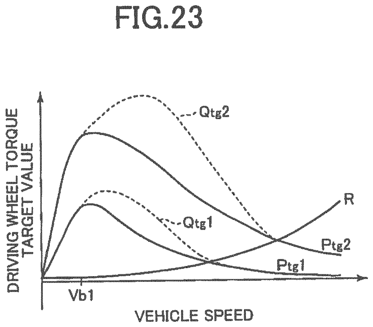

FIG. 23 shows an example of a result of the correction processing by the first correction processing unit 15Ha. In FIG. 23, the abscissa indicates the vehicle speed, and the ordinate indicates the driving wheel torque target value. The solid line R indicates basic running resistance, and the solid lines Ptg1 and Ptg2 each indicate an example of a relationship between the vehicle speed and the driving wheel torque target value before the correction (here, the rear wheel torque) with the accelerator operation amount remaining constant. The broken lines Qtgl, Qtg2 indicate driving wheel torque target values after the correction corresponding to the driving wheel torque target values indicated by the respective solid lines Ptg1 and Ptg2.

Generally, when the engine rotation speed increases, that is, when the vehicle speed becomes higher, the engine torque decreases. Thus, as shown in FIG. 23, the driving wheel torque target values indicated by the respective solid lines Ptg1, Ptg2 become smaller after passing the peak thereof as the vehicle speed increases. As described above, in the area where the vehicle speed is lower than Vb1, the correction coefficient is set to one. Thus, the driving wheel torque target values after the correction indicated by the respective broken lines Qtgl, Qtg2 remain coincident with the respective driving wheel torque target values before the correction indicated by the respective solid lines Ptg1, Ptg2 until the vehicle speed reaches Vb1. In the area where the vehicle speed is higher than Vb1, because the correction coefficient is set to a value higher than one, the driving wheel torque target values after the correction indicated by the respective broken lines Qtgl, Qtg2 are higher than the driving wheel torque target values before the correction indicated by the respective solid lines Ptg1, Ptg2. As the vehicle speed becomes higher, the driving wheel torque target value before the correction becomes gradually smaller, and the basic running resistance becomes gradually larger. Thus, as the vehicle speed becomes higher, the difference between the driving wheel torque target value before the correction and the basic running resistance becomes gradually smaller. As a result, an increase amount of the driving wheel torque target value after the correction (the broken lines Qtgl, Qtg2) relative to the driving wheel torque target value before the correction (the solid lines Ptg1, Ptg2) becomes gradually smaller as the vehicle speed becomes higher. Then, at the vehicle speed at which the driving wheel torque target value before the correction becomes equal to the basic running resistance, the driving wheel torque target value after the correction becomes equal to the driving wheel torque target value before the correction.

The driving force target correction unit 15H corrects the driving wheel torque target value, based on the vehicle speed, such that the correction to the driving wheel torque target value by the first correction processing unit 15Ha and the second correction processing unit 15Hb is reduced when the vehicle speed is equal to or less than a predetermined value. The driving force target correction unit 15H corrects the driving wheel torque target value, based on the accelerator operation amount, such that the correction to the driving wheel torque target value by the first correction processing unit 15Ha and the second correction processing unit 15Hb is reduced when the accelerator operation amount is equal to or less than a predetermined value. With the above, when the vehicle speed is low or the accelerator operation amount is small, it is possible to prevent increase of the driving force of the vehicle due to the correction, and thus to improve the comfort of riding at deceleration of the vehicle.

In order to achieve such reduction, the driving force target correction unit 15H in the example shown in FIG. 18 includes a correction amount reduction processing unit 15Hc. The correction amount reduction processing unit 15Hc further corrects the driving wheel torque target value corrected by the first correction processing unit 15Ha and the second correction processing unit 15Hb, based on the vehicle speed and the accelerator operation amount. In other words, the correction amount reduction processing unit 15Hc controls the increase amount of the driving wheel torque target value corrected by the first correction processing unit 15Ha and the second correction processing unit 15Hb relative to the basic driving wheel torque target value, based on the vehicle speed and the accelerator operation amount.

The correction amount reduction processing unit 15Hc shown as an example in FIG. 18 calculates the difference (an increase amount) between the driving wheel torque target value corrected by the first correction processing unit 15Ha and the second correction processing unit 15Hb and the basic driving wheel torque target value calculated by the conversion unit 15B. Then, the correction amount reduction processing unit 15Hc multiplies the above described vehicle speed coefficient (see FIG. 21(a)) determined in accordance with the vehicle speed and the accelerator coefficient (see FIG. 21(b)) determined in accordance with the accelerator operation amount to the difference. The driving force target correction unit 15H adds the result of multiplication to the basic driving wheel torque target value to determine the result as the driving wheel torque target value after the correction, that is, the final driving wheel torque target value. With the above, in the area where the vehicle speed is lower than Va1 and the area where the accelerator operation amount is smaller than Acl, the correction by the first correction processing unit 15Ha and the second correction processing unit 15Hb is resultantly reduced.

In the example shown in FIG. 18, the driving force target correction unit 15H adds the correction amount calculated by the above described running load correction amount calculation unit 15G and the result of multiplication by the correction amount reduction processing unit 15Hc to the basic driving wheel torque target value to determine the result as the final driving wheel torque target value. Then, based on the final driving wheel torque target value, processing by the above described inverse conversion unit 15D and the target throttle opening degree calculation unit 18 is executed. The above describes the processing executed by the control device in the embodiment shown in Fig. 18.

Note here that in the above described embodiment, the target throttle opening degree calculation unit 18 calculates a target throttle opening degree in accordance with the final engine torque target value to control the driving force of the vehicle. However, there may be a case in which, when the driving force target correction unit 15H corrects the basic driving wheel target torque, the resultant final engine torque target value does not enable actual setting of the throttle opening degree. To address the above, in the modified example described below, in such a case, a rotation speed correction unit 11H corrects the basic target engine rotation speed, based on the information concerning the driving force of the vehicle, to thereby change the transmission ratio of the CVT 5 to obtain a desired driving force.

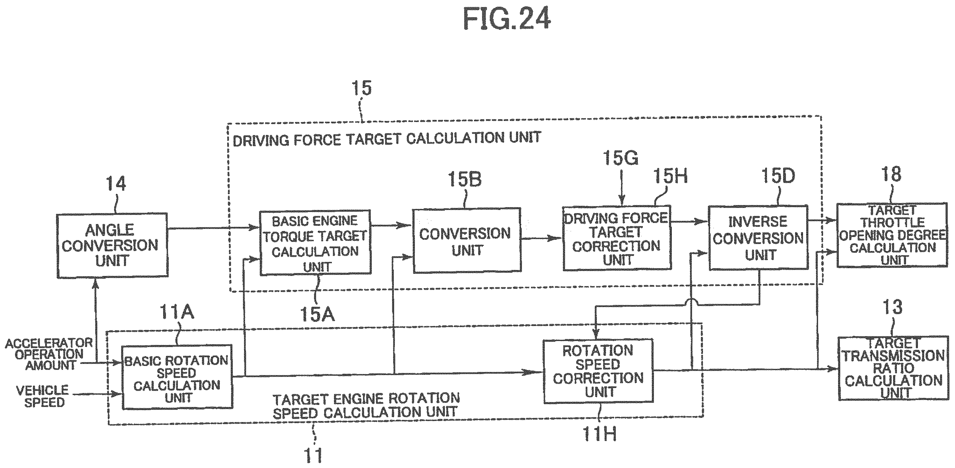

FIG. 24 is a block diagram showing embodiment of the control device 10 according to the invention, in which a structure same as that in the above described example is given the same reference number and details thereof are not described. In this embodiment, the final engine torque target value outputted from the inverse conversion unit 15D of the driving force target calculation unit 15 is inputted into the rotation speed correction unit 11H of the target engine rotation speed calculation unit 11. The rotation speed correction unit 11H calculates the final target engine rotation speed, based on the basic target engine rotation speed from the basic rotation speed calculation unit 11A and the final engine torque target value from the inverse conversion unit 15D.

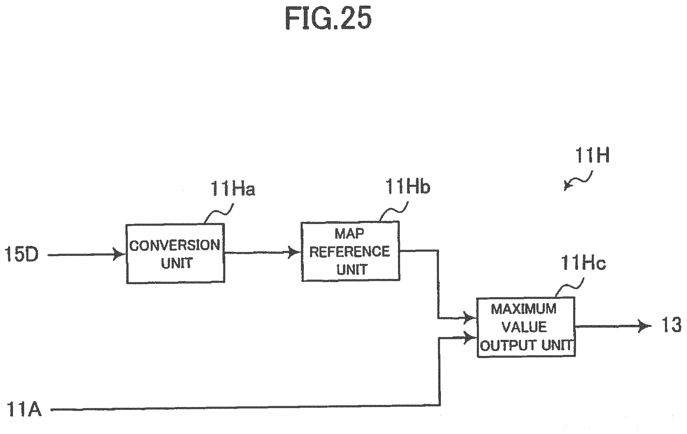

FIG. 25 is a block diagram showing the rotation speed correction unit 11H in the example. The rotation speed correction unit 11H includes a conversion unit 11Ha, a map reference unit 11Hb (one example of a holding unit), and a maximum value output unit 11Hc (one example of a comparison unit).

The conversion unit 11Ha converts the final engine torque target value from the inverse conversion unit 15D into a final engine power target value, and outputs the resultant final engine power target value to the map reference unit 11Hb. The final engine power target value is calculated by, for example, multiplying the basic target engine rotation speed from the basic rotation speed calculation unit 11A to the final engine torque target value.

The map reference unit 11Hb holds a map for correlating the engine power and the engine rotation speed, reads from the map an engine rotation speed corresponding to the final engine power target value from the conversion unit 11Ha, and outputs to the maximum value output unit 11Hc. Content of the map held in the map reference unit 11Hb will be described later in detail.

The maximum value output unit 11Hc compares the basic target engine rotation speed from the basic rotation speed calculation unit 11A and the engine rotation speed read from the map reference unit 11Hb, and outputs the larger one to the target transmission ratio calculation unit 13 as the final target engine rotation speed.

That is, the engine rotation speed read from the map by the map reference unit 11Hb can be rephrased as the lower limit of the final target engine rotation speed. In the following, the engine rotation speed read from the map by the map reference unit 11Hb is referred to as the "lower limit engine rotation speed" and the map as a "lower limit engine rotation speed map".

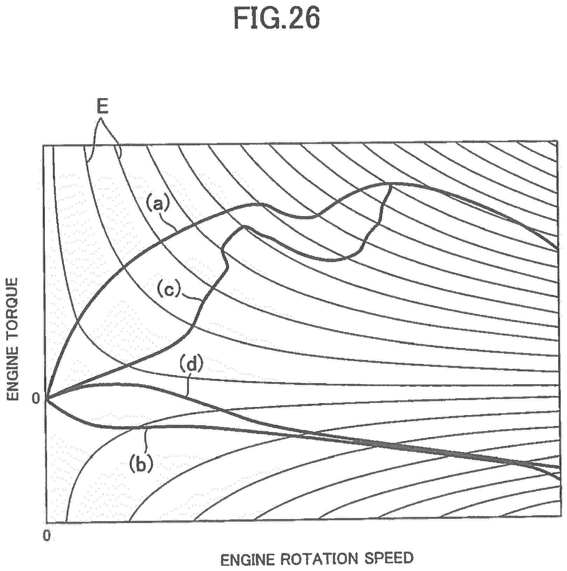

Before describing the content of the lower limit engine rotation speed map, a relationship between the engine rotation speed and the engine torque will be described. FIG. 26 is a graph showing an example of a relationship between the engine rotation speed and the engine torque, in which the abscissa indicates the engine rotation speed, and the ordinate indicates the engine torque. In FIG. 26, each thin line E indicates an equivalent power line connecting points with equivalent engine powers.

Among the four thick lines (a) to (d) in FIG. 26, the thick line (a) is a line (hereinafter referred to as a fully opened curved line (a)) connecting points with the throttle opening degree in a fully opened state. The thick line (b) is a line (hereinafter referred to as a fully closed curved line (b)) connecting points with the throttle opening degree in a fully closed state. A driving point is positioned within an area which enables setting of a throttle opening degree, that is, the area between the fully opened curved line (a) and the fully closed curved line (b).

The thick line (c) is a line (hereinafter referred to as an optimally efficient driving line (c)) connecting points with the smallest fuel consumption on the respective equivalent power lines. The thick line (d) is a line (hereinafter referred to as an idling line (d)) connecting points with the engine in an idling state.

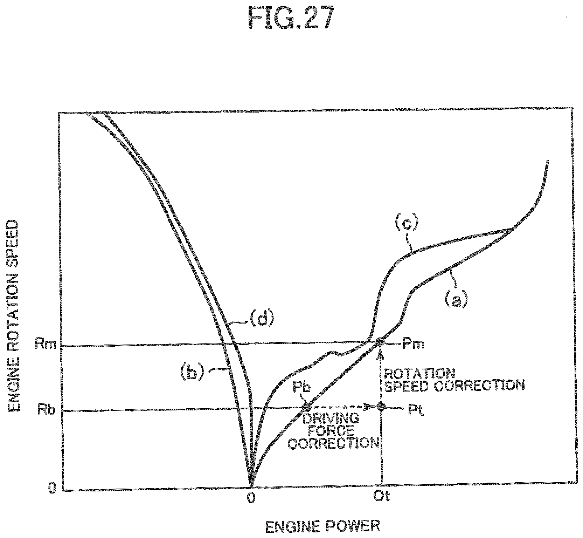

Below, the content of the lower limit engine rotation speed map will be described. FIG. 27 is a graph showing an example of a relationship between the engine power and the engine rotation speed, showing the content of the lower limit engine rotation speed map, in which the abscissa indicates the engine power, and the ordinate indicates the engine rotation speed. The graph in FIG. 27 (engine power - engine rotation speed) is a result of conversion of the engine torque in the graph (engine rotation speed - engine torque) in FIG. 26 into an engine power. The equivalent power line E in FIG. 26 corresponds to a line in parallel to the ordinate in FIG. 27.

The four thick lines (a) to (d) in FIG. 27 correspond to the four respective thick lines (a) to (d) in FIG. 26. As described above, the driving point is positioned in the area between the fully opened curved line (a) and the fully closed curved line (b).

Note here that, basically, the basic engine torque target value calculated by the basic engine torque target calculation unit 15A of the driving force target calculation unit 15 is calculated so as to be positioned in the area between the fully opened curved line (a) and the fully closed curved line (b) . However, with correction by the driving force target correction unit 15H, the final engine torque target value may be positioned outside the area between the fully opened curved line (a) and the fully closed curved line (b).

FIG. 27 shows an example in which the final engine power target value Ot exceeds the fully opened curved line (a) in the abscissa direction as a result of correction of the driving force. Specifically, the target driving point Pt determined based on the final engine power target value Ot and the basic target engine rotation speed Rb is positioned outside the area between the fully opened curved line (a) and the fully closed curved line (b), and accordingly, it is not possible to achieve the target driving point Pt.

In the above described embodiment, correction to the driving force of the vehicle is independent of correction to the engine rotation speed, and a desired driving force is obtained by adjusting the target throttle opening degree alone. Thus, when the target driving point Pt exceeds the fully opened curved line (a) in the abscissa direction, the actual driving point Pb does not exceed the fully opened curved line (a) in the abscissa direction but remains on the fully opened curved line (a) . Thus, it is not possible to obtain a driving force that achieves the final engine power target value Ot.

On the contrary, according to the rotation speed correction unit 11H in this modified example, the map reference unit 11Hb reads an engine rotation speed (the lower limit engine rotation speed) Rm corresponding to the final engine power target value Ot on the fully opened curved line (a), and the maximum value output unit 11Hc compares the lower limit engine rotation speed Rm and the basic target engine rotation speed Rb to make the larger one as the final target engine rotation speed. That is, when the basic target engine rotation speed Rb is smaller than the lower limit engine rotation speed Rm, the engine rotation speed is corrected from the basic target engine rotation speed Rb to the lower limit engine rotation speed Rm. As a result of such correction to the rotation speed, the driving point Pm is changed to be at a position on the fully opened curved line (a) determined based on the final engine power target value Ot and the lower limit engine rotation speed Rm, and a driving force that achieves the final engine power target value Ot is obtained.

Further, similar rotation speed correction is executed also in the case where the final engine power target value Ot is below the fully closed curved line (b) in the abscissa direction. That is, in a case where the basic target engine rotation speed is smaller than the lower limit engine rotation speed corresponding to the final engine power target value Ot on the fully closed curved line (b), the lower limit engine rotation speed is outputted as the final target engine rotation speed.

Note here that although an example is described in the above in which an engine rotation speed on the fully opened curved line (a) or the fully closed curved line (b) makes the lower limit engine rotation speed, this is not limiting, and an engine rotation speed on the optimally efficient driving line (c) or the idling line (d) may make the lower limit engine rotation speed. Further, the fully opened curved line (a) may be combined with the idling line (d), the fully closed curved line (b) may be combined with the optimally efficient driving line (c), or each of the curved lines (a) to (d) may be used by itself.

In the above described modified example, it is controlled through operation of the map reference unit 11Hb and the maximum value output unit 11Hc such that the driving point is positioned in an area on the upper side (the side with a higher engine rotation speed) of the thick line, such as the fully opened curved line (a) or the like, in the ordinate direction in FIG. 27. This is not limiting.

For example, it may be controlled such that the driving point is positioned in an area on the lower side (the side with a lower engine rotation speed) of any line such as the optimally efficient driving line (c) or the like in the ordinate direction. In this case, when the basic target engine rotation speed is larger than an engine rotation speed (an upper limit engine rotation speed) corresponding to the final engine power target value Ot on any line, the upper limit engine rotation speed is outputted as the final target engine rotation speed. With the above, increase of the engine rotation speed is prevented. Further, it is possible to control such that the driving point is positioned, avoiding a specific area resulting in significant vibration.

Further, in a running mode, for example, it may be controlled such that a driving point is bound to be on a desired line, such as the optimally efficient driving line (c) or the like. In this case, an engine rotation speed corresponding to the final engine power target value Ot on any line is always outputted as the final target engine rotation speed.

Note that although the rotation speed correction unit 11H calculates the final target engine rotation speed, based on the basic target engine rotation speed and the final engine power target value as a value concerning the driving force of the vehicle in the above described modified example, this is not limiting.

For example, as the value concerning the driving force of the vehicle, the final engine torque target value outputted from the inverse conversion unit 15D of the driving force target calculation unit 15 may be used intact, the final driving wheel torque target value outputted from the driving force target correction unit 15H may be used, or a final driving wheel power target value resulting from conversion of the final driving wheel torque target value into a power may be used. Further, not being limited to such target values after correction, a target value before correction may be used as a value concerning the driving force of the vehicle. Further, a detection value, such as the driving force of the rear wheel 8, the vehicle acceleration, or the like, may be used as the value concerning the driving force of the vehicle.

Note that the rotation speed correction in the above described modified example may be combined with the rotation speed correction in the above described embodiment. For example, the correction amount of the engine rotation speed in the rotation speed correction unit 11H shown in FIGs. 24 and 25 may be added to the correction amount of the engine rotation speed in the rotation speed correction unit 11B shown in FIG. 5 or the like.

Although the target engine rotation speed resulting from correction to the basic target engine rotation speed is referred to as the final target engine rotation speed in the above description, the term "final" does not necessarily exclude a case in which the target engine rotation speed resulting from correction to the basic target engine rotation speed is further corrected.

**Claims**

1. A vehicle control device for controlling a transmission ratio of a continuously variable transmission (5) and a throttle opening degree, comprising:

   a basic target engine rotation speed calculation unit (11A) configured to calculate a basic target engine rotation speed, based on information concerning a vehicle speed;
   a final target engine rotation speed calculation unit (11) configured to calculate a final target engine rotation speed, based on the basic target engine rotation speed and a target value concerning a driving force of a vehicle, and
   a target transmission ratio calculation unit (13) configured to calculate a target transmission ratio, based on the final target engine rotation speed, **characterized in that** said control device further comprises
   a target engine torque calculation unit (15) configured to calculate a target engine torque, based on an accelerator operation amount and the basic target engine rotation speed; and
   a target throttle opening degree calculation unit (18) configured to calculate a target throttle opening degree, based on the target engine torque and the final target engine rotation speed.

2. A vehicle control device according to claim 1, wherein the target engine torque calculation unit (15) includes a driving force target value calculation unit (15B) configured to calculate a driving force target value that is the target value concerning the driving force of the vehicle, based on the accelerator operation amount and the basic target engine rotation speed.

3. A vehicle control device according to claim 2, wherein the target engine torque calculation unit (15) further includes a driving force target value correction unit (15C) configured to correct the driving force target value under a predetermined condition, and the final target engine rotation speed calculation unit (11) is configured to use the driving force target value corrected as the value concerning the driving force of the vehicle.

4. A vehicle control device according to any of claims 1 to 3, wherein the final target engine rotation speed calculation unit (11) includes
   a holding unit (11Hb) configured to hold information indicating a relationship between the value concerning the driving force of the vehicle and a basic value of the final target engine rotation speed, and

a comparison unit (11Hc) configured to compare a basic value of the final target engine rotation speed corresponding to the value concerning the driving force of the vehicle and the basic target engine rotation speed to determine one of the basic value and the basic target engine rotation speed as the final target engine rotation speed.

5. A vehicle control device according to any of claims 1 to 3, wherein the final target engine rotation speed calculation unit (11) includes

a holding unit (11Hb) configured to hold information indicating a relationship between the value concerning the driving force of the vehicle and a lower limit value of the final target engine rotation speed, and

a comparison unit (11Hc) configured to compare a lower limit value of the final target engine rotation speed corresponding to the value concerning the driving force of the vehicle and the basic target engine rotation speed to determine a larger one of the lower limit value and the basic target engine rotation speed as the final target engine rotation speed.

6. A vehicle control device according to claim 5, wherein the lower limit value of the final target engine rotation speed is a lower limit value of the engine rotation speed when the throttle opening degree is in a fully opened state, or

the lower limit value of the final target engine rotation speed is a lower limit value of the engine rotation speed when the throttle opening degree is in a fully closed state, or

the lower limit value of the final target engine rotation speed is an engine rotation speed that is defined by an optimally efficient driving line, or

the lower limit of the final target engine rotation speed is an idling rotation speed.

7. A motorcycle comprising the vehicle control device according to any one of claims 1 to 6.

8. A vehicle control method for controlling a transmission ratio of a continuously variable transmission (5) and a throttle opening degree, comprising:

calculating a basic target engine rotation speed, based on information concerning a vehicle speed;

calculating a final target engine rotation speed, based on the basic target engine rotation speed and a target value concerning a driving force of a vehicle, and

calculating a target transmission ratio, based on the final target engine rotation speed, **characterized in that** said method further comprises the steps of

calculating a target engine torque, based on an accelerator operation amount and the basic target engine rotation speed, and

calculating a target throttle opening degree, based on the target engine torque and the final target engine rotation speed.

9. A vehicle control method according to claim 8, further comprising:

calculating a driving force target value that is the target value concerning the driving force of the vehicle, based on the accelerator operation amount and the basic target engine rotation speed.

10. A vehicle control method according to claim 9, further comprising:

correcting the driving force target value under a predetermined condition, and

using the driving force target value corrected as the value concerning the driving force of the vehicle.

11. A vehicle control method according to any of claims 8 to 10, further comprising:

holding information indicating a relationship between the value concerning the driving force of the vehicle and a basic value of the final target engine rotation speed, and

comparing a basic value of the final target engine rotation speed corresponding to the value concerning the driving force of the vehicle and the basic target engine rotation speed to determine one of the basic value and the basic target engine rotation speed as the final target engine rotation speed.

12. A vehicle control method according to any of claims 8 to 10, further comprising:

holding information indicating a relationship between the value concerning the driving force of the vehicle and a lower limit value of the final target engine rotation speed, and

comparing a lower limit value of the final target engine rotation speed corresponding to the value concerning the driving force of the vehicle and the basic target engine rotation speed to determine a larger one of the lower limit value and the basic target engine rotation speed as the final target engine rotation speed.

13. A vehicle control method according to claim 12, wherein the lower limit value of the final target engine rotation speed is a lower limit value of the engine rotation speed when the throttle opening degree is in a fully opened state, or

the lower limit value of the final target engine rotation speed is a lower limit value of the engine rotation speed when the throttle opening degree is in a fully closed state, or

the lower limit value of the final target engine rotation speed is an engine rotation speed that is defined by an optimally efficient driving line, or

the lower limit of the final target engine rotation speed is an idling rotation speed.

**Patentansprüche**

1. Eine Fahrzeug-Steuer-Vorrichtung zur Steuerung eines Übersetzungs-Verhältnisses eines kontinuierlich-variablen Getriebes (5) und eines Drossel-Öffnungs-Grades, die umfasst:

   eine Basis-Ziel-Motor-Drehzahl-Berechnungs-Einheit (11A), die konfiguriert ist, um eine Basis-Ziel-Motor-Drehzahl zu berechnen, auf Grundlage von Informationen bezüglich einer Fahrzeug-Geschwindigkeit;
   eine Endgültig-Ziel-Motor-Drehzahl-Berechnungs-Einheit (11), die konfiguriert ist, um eine Endgültig-Ziel-Motor-Drehzahl zu berechnen, auf Grundlage der Basis-Ziel-Motor-Drehzahl und eines Ziel-Werts bezüglich einer Antriebs-Kraft von einem Fahrzeug, und
   eine Ziel-Übersetzungs-Verhältnis-Berechnungs-Einheit (13), die konfiguriert ist, um ein Ziel-Übersetzungs-Verhältnis auf Grundlage der Endgültig-Ziel-Motor-Drehzahl,
   **dadurch gekennzeichnet, dass** diese Steuer-Vorrichtung weiter umfasst:

   eine Ziel-Motor-Moment-Berechnungs-Einheit (15), die konfiguriert ist, um ein Ziel-Motor-Moment zu berechnen, auf Grundlage von einem Beschleuniger-Betätigungs-Betrag und der Basis-Ziel-Motor-Drehzahl; und
   eine Ziel-Drossel-Öffnungs-Grad-Berechnungs-Einheit (18), die konfiguriert ist, um einen Ziel-Drossel-Öffnungs-Grad zu berechnen, auf Grundlage des Ziel-Motor-Moments und der Endgültig-Ziel-Motor-Drehzahl.

2. Eine Fahrzeug-Steuer-Vorrichtung gemäß Anspruch 1, wobei die Ziel-Motor-Moment-Berechnungs-Einheit (15) eine Antriebs-Kraft-Ziel-Wert-Berechnungs-Einheit (15B) beinhaltet, die konfiguriert ist, um einen Antriebs-Kraft-Ziel-Wert zu berechnen, welcher der Ziel-Wert bezüglich der Antriebs-Kraft von dem Fahrzeug ist, auf der Grundlage von dem Beschleuniger-Betätigungs-Betrag und der Basis-Ziel-Motor-Drehzahl.

3. Eine Fahrzeug-Steuer-Vorrichtung gemäß Anspruch 2, wobei die Ziel-Motor-Moment-Berechnungs-Einheit (15) weiterhin eine Antriebs-Kraft-Ziel-Wert-Korrektur-Einheit (15C) beinhaltet, die konfiguriert ist, um den Antriebs-Kraft-Ziel-Wert unter einer vorgegebenen Bedingung zu korrigieren, und

die Endgültig-Ziel-Motor-Drehzahl-Berechnungs-Einheit (11) konfiguriert ist, um den Antriebs-Kraft-Ziel-Wert zu verwenden, der korrigiert ist, als der Wert bezüglich der Antriebs-Kraft von dem Fahrzeug.

4. Eine Fahrzeug-Steuer-Vorrichtung gemäß zu irgendeinem der Ansprüche 1 bis 3, wobei die Endgültig-Ziel-Motor-Drehzahl-Berechnungs-Einheit (11) beinhaltet eine Halte-Einheit (11Hb), die konfiguriert ist, um Informationen, die eine Beziehung zwischen dem Wert bezüglich der Antriebs-Kraft von dem Fahrzeug und einem Basis-Wert von der Endgültig-Ziel-Motor-Drehzahl angeben, zu halten, und eine Vergleichs-Einheit (11Hc), die konfiguriert ist, um einen Basis-Wert von der Endgültig-Ziel-Motor-Drehzahl entsprechend zu dem Wert bezüglich der Antriebs-Kraft von dem Fahrzeug und der Basis-Ziel-Motor-Drehzahl zu vergleichen, um einen von dem Basis-Wert und der Basis-Ziel-Motor-Drehzahl als die Endgültig-Ziel-Motor-Drehzahl zu bestimmen.

5. Eine Fahrzeug-Steuer-Vorrichtung gemäß zu irgendeinem der Ansprüche 1 bis 3, wobei die Endgültig-Ziel-Motor-Drehzahl-Berechnungs-Einheit (11) beinhaltet eine Halte-Einheit (11Hb), die konfiguriert ist, um Informationen, die eine Beziehung zwischen dem Wert bezüglich der Antriebs-Kraft von dem Fahrzeug und einen unteren Grenz-Wert von der Endgültig-Ziel-Motor-Drehzahl angeben, zu halten, und

eine Vergleichs-Einheit (11Hc), die konfiguriert ist, um einen unteren Grenz-Wert von der Endgültig-Ziel-Motor-Drehzahl entsprechend zu dem Wert bezüglich der Antriebs-Kraft von dem Fahrzeug und der Basis-Ziel-Motor-Drehzahl zu vergleichen, um einen größeren von dem unteren Grenz-Wert und der Basis-Ziel-Motor-Drehzahl als die Endgültig-Ziel-Motor-Drehzahl zu bestimmen.

6. Eine Fahrzeug-Steuer-Vorrichtung gemäß zu Anspruch 5, wobei der untere Grenz-Wert von der Endgültig-Ziel-Motor-Drehzahl ein unterer Grenz-Wert von der Motor-Drehzahl ist, wenn der Drossel-Öffnungs-Grad in einem vollständig geöffneten Zustand ist, oder der untere Grenz-Wert von der Endgültig-Ziel-Motor-Drehzahl ein unterer Grenz-Wert von der Motor-Drehzahl ist, wenn der Drossel-Öffnungs-Grad in einem vollständig geschlossenen Zustand ist, oder

der untere Grenz-Wert von der Endgültig-Ziel-Motor-Drehzahl eine Drehzahl ist, die durch eine Optimal-Effizienz-Fahr-Linie definiert ist, oder
der untere Grenz-Wert von der Endgültig-Ziel-Motor-Drehzahl eine Leerlauf-Drehzahl ist.

7. Ein Motorrad, das die Fahrzeug-Steuer-Vorrichtung gemäß zu irgendeinem der Ansprüche 1 bis 6 umfasst.

8. Ein Fahrzeug-Steuer-Verfahren zur Steuerung eines Übersetzungs-Verhältnisses eines kontinuierlich-variablen Getriebes (5) und eines Drossel-Öffnungs-Grades, das umfasst:

Berechnen einer Basis-Ziel-Motor-Drehzahl, auf Grundlage von Informationen bezüglich einer Fahrzeug-Geschwindigkeit;
Berechnen einer Endgültig-Ziel-Motor-Drehzahl, auf Grundlage der Basis-Ziel-Motor-Drehzahl und eines Ziel-Werts bezüglich einer Antriebs-Kraft von einem Fahrzeug, und
Berechnen eines Ziel-Übersetzungs-Verhältnis auf Grundlage der Endgültig-Ziel-Motor-Drehzahl, **dadurch gekennzeichnet, dass** dieses Verfahren weiter die Schritte umfasst:

Berechnen eines Ziel-Motor-Moment, auf Grundlage von einem Beschleuniger-Betätigungs-Betrag und der Basis-Ziel-Motor-Drehzahl; und
Berechnen eines Ziel-Drossel-Öffnungs-Grad, auf Grundlage des Ziel-Motor-Moments und der Endgültig-Ziel-Motor-Drehzahl.

9. Ein Fahrzeug-Steuer-Verfahren gemäß Anspruch 8, das weiter umfasst:
Berechnen eines Antriebs-Kraft-Ziel-Wert, welcher der Ziel-Wert bezüglich der Antriebs-Kraft von dem Fahrzeug ist, auf der Grundlage von dem Beschleuniger-Betätigungs-Betrag und der Basis-Ziel-Motor-Drehzahl.

10. Ein Fahrzeug-Steuer-Verfahren gemäß Anspruch 9, das weiter umfasst:

Korrigieren des Antriebs-Kraft-Ziel-Wert unter einer vorgegebenen Bedingung, und
Verwenden des Antriebs-Kraft-Ziel-Wert, der korrigiert ist, als der Wert bezüglich der Antriebs-Kraft von dem Fahrzeug.

11. Ein Fahrzeug-Steuer-Verfahren gemäß zu irgendeinem der Ansprüche 8 bis 10, das weiter umfasst:

Halten von Informationen, die eine Beziehung zwischen dem Wert bezüglich der Antriebs-Kraft von dem Fahrzeug und einem Basis-Wert von der Endgültig-Ziel-Motor-Drehzahl angeben, und
Vergleichen eines Basis-Wert von der Endgültig-Ziel-Motor-Drehzahl entsprechend zu dem Wert bezüglich der Antriebs-Kraft von dem Fahrzeug und der Basis-Ziel-Motor-Drehzahl, um einen von dem Basis-Wert und der Basis-Ziel-Motor-Drehzahl als die Endgültig-Ziel-Motor-Drehzahl zu bestimmen.

12. Ein Fahrzeug-Steuer-Verfahren gemäß zu irgendeinem der Ansprüche 8 bis 10, das weiter umfasst:

Halten von Informationen, die eine Beziehung zwischen dem Wert bezüglich der Antriebs-Kraft von dem Fahrzeug und einen unteren Grenz-Wert von der Endgültig-Ziel-Motor-Drehzahl angeben, und
Vergleichen eines unteren Grenz-Wert von der Endgültig-Ziel-Motor-Drehzahl entsprechend zu dem Wert bezüglich der Antriebs-Kraft von dem Fahrzeug und der Basis-Ziel-Motor-Drehzahl, um einen größeren von dem unteren Grenz-Wert und der Basis-Ziel-Motor-Drehzahl als die Endgültig-Ziel-Motor-Drehzahl zu bestimmen.

13. Ein Fahrzeug-Steuer-Verfahren gemäß zu Anspruch 12, wobei der untere Grenz-Wert von der Endgültig-Ziel-Motor-Drehzahl ein unterer Grenz-Wert von der Motor-Drehzahl ist, wenn der Drossel-Öffnungs-Grad in einem vollständig geöffneten Zustand ist, oder der untere Grenz-Wert von der Endgültig-Ziel-Motor-Drehzahl ein unterer Grenz-Wert von der Motor-Drehzahl ist, wenn der Drossel-Öffnungs-Grad in einem vollständig geschlossenen Zustand ist, oder
der untere Grenz-Wert von der Endgültig-Ziel-Motor-Drehzahl eine Drehzahl ist, die durch eine Optimal-Effizienz-Fahr-Linie definiert ist, oder
der untere Grenz-Wert von der Endgültig-Ziel-Motor-Drehzahl eine Leerlauf-Drehzahl ist.

**Revendications**

1. Dispositif de commande de véhicule destiné à commander le rapport de transmission d'une transmission continûment variable (5) et le degré d'ouverture du papillon des gaz, comprenant :

une unité de calcul de régime de rotation moteur cible de base (11A) configurée pour calculer un régime de rotation moteur cible de base sur la base d'informations relatives à la vitesse du véhicule,
une unité de calcul de régime de rotation moteur cible final (11) configurée pour calculer un régime de rotation moteur cible final sur la base du régime de rotation moteur cible de base et d'une valeur cible relative à la force d'entraînement de véhicule, et

une unité de calcul de rapport de transmission cible (13) configurée pour calculer un rapport de transmission cible sur la base du régime de rotation moteur cible final, **caractérisé en ce que** ledit dispositif de commande comprend en outre :

une unité de calcul de couple moteur cible (15) configurée pour calculer un couple moteur cible sur la base d'une grandeur de manœuvre d'accélérateur et du régime de rotation moteur cible de base, et
une unité de calcul de degré d'ouverture de papillon des gaz cible (18) configurée pour calculer un degré d'ouverture de papillon des gaz cible sur la base du couple moteur cible et du régime de rotation moteur cible final.

2. Dispositif de commande de véhicule selon la revendication 1, dans lequel l'unité de calcul de couple moteur cible (15) inclut une unité de calcul de valeur cible de force d'entraînement (15B) configurée pour calculer la valeur cible de force d'entraînement qui représente la valeur cible relative à la force d'entraînement du véhicule, sur la base de la grandeur de manœuvre d'accélérateur et du régime de rotation moteur cible de base.

3. Dispositif de commande de véhicule selon la revendication 2, dans lequel l'unité de calcul de couple moteur cible (15) inclut en outre une unité de correction de valeur cible de force d'entraînement (15C) configurée pour corriger la valeur cible de force d'entraînement sous une condition prédéterminée, et l'unité de calcul de régime de rotation moteur cible final (11) est configurée pour utiliser la valeur cible de force d'entraînement corrigée comme valeur relative à la force d'entraînement du véhicule.

4. Dispositif de commande de véhicule selon l'une quelconque des revendications 1 à 3, dans lequel l'unité de calcul de régime de rotation moteur cible final (11) inclut :

une unité de maintien (1Hb) configurée pour maintenir des informations indiquant la relation entre la valeur relative à la force d'entraînement du véhicule et la valeur de base du régime de rotation moteur cible final, et
une unité de comparaison (1Hc) configurée pour comparer la valeur de base du régime de rotation moteur cible final correspondant à la valeur relative à la force d'entraînement du véhicule et le régime de rotation moteur cible de base afin de déterminer l'un de la valeur de base et du régime de rotation moteur cible de base comme régime de rotation moteur cible final.

5. Dispositif de commande de véhicule selon l'une quelconque des revendications 1 à 3, dans lequel l'unité de calcul de régime de rotation moteur cible final (11) inclut :

une unité de maintien (11Hb) configurée pour maintenir des informations indiquant la relation entre la valeur relative à la force d'entraînement du véhicule et une valeur limite inférieure du régime de rotation moteur cible final, et
une unité de comparaison (1Hc) configurée pour comparer la valeur limite inférieure du régime de rotation moteur cible final correspondant à la valeur relative à la force d'entraînement du véhicule et le régime de rotation moteur cible de base afin de déterminer le plus grand de la valeur limite inférieure et du régime de rotation moteur cible de base comme régime de rotation moteur cible final.

6. Dispositif de commande de véhicule selon la revendication 5, dans lequel la valeur limite inférieure du régime de rotation moteur cible final est la valeur limite inférieure du régime de rotation moteur lorsque le degré d'ouverture du papillon des gaz se trouve à l'état entièrement ouvert, ou
la valeur limite inférieure du régime de rotation moteur cible final est la valeur limite inférieure du régime de rotation moteur lorsque le degré d'ouverture du papillon des gaz se trouve à l'état entièrement fermé, ou
la valeur limite inférieure du régime de rotation moteur cible final est le régime de rotation moteur qui est défini par une ligne d'entraînement efficace de manière optimale, ou
la limite inférieure du régime de rotation moteur cible final est le régime de rotation au ralenti.

7. Motocyclette comprenant le dispositif de commande de véhicule conforme à l'une quelconque des revendications 1 à 6.$$$

8. Procédé de commande de véhicule destiné à commander le rapport de transmission d'une transmission continûment variable (5) et le degré d'ouverture de papillon des gaz, comprenant :

le calcul d'un régime de rotation moteur cible de base sur la base d'informations relatives à la vitesse du véhicule,
le calcul d'un régime de rotation moteur cible final sur la base du régime de rotation moteur cible de base et d'une valeur cible relative à la force d'entraînement de véhicule, et
le calcul d'un rapport de transmission cible sur la base du régime de rotation moteur cible final, **caractérisé en ce que** ledit procédé comprend en outre les étapes suivantes :

le calcul d'un couple moteur cible sur la base d'une grandeur de manœuvre d'accélérateur et du régime de rotation moteur cible de base, et
le calcul d'un degré d'ouverture de papillon des gaz cible sur la base du couple moteur cible et du régime de rotation moteur cible final.

9. Procédé de commande de véhicule selon la revendication 8, comprenant en outre :
le calcul de la valeur cible de force d'entraînement qui représente la valeur cible relative à la force d'entraînement du véhicule, sur la base de la grandeur de manœuvre d'accélérateur et du régime de rotation moteur cible de base.

10. Procédé de commande de véhicule selon la revendication 9, comprenant en outre :

la correction de la valeur cible de force d'entraînement sous une condition prédéterminée, et
l'utilisation de la valeur cible de force d'entraînement corrigée comme valeur relative à la force d'entraînement du véhicule.

11. Procédé de commande de véhicule selon l'une quelconque des revendications 8 à 10, comprenant en outre :

le maintien d'informations indiquant la relation entre la valeur relative à la force d'entraînement du véhicule et la valeur de base du régime de rotation moteur cible final, et
la comparaison de la valeur de base du régime de rotation moteur cible final correspondant à la valeur relative à la force d'entraînement du véhicule et du régime de rotation moteur cible de base afin de déterminer l'un de la valeur de base et du régime de rotation moteur cible de base comme régime de rotation moteur cible final.

12. Procédé de commande de véhicule selon l'une quelconque des revendications 8 à 10, comprenant en outre :

le maintien d'informations indiquant la relation entre la valeur relative à la force d'entraînement du véhicule et la valeur limite inférieure du régime de rotation moteur cible final, et
la comparaison de la valeur limite inférieure du régime de rotation moteur cible final correspondant à la valeur relative à la force d'entraînement du véhicule et du régime de rotation moteur cible de base afin de déterminer le plus grand de la valeur de base et du régime de rotation moteur cible de base comme régime de rotation moteur cible final.

13. Procédé de commande de véhicule selon la revendication 12, dans lequel la valeur limite inférieure du régime de rotation moteur cible final est la valeur limite inférieure du régime de rotation moteur lorsque le degré d'ouverture du papillon des gaz se trouve à l'état entièrement ouvert, ou
la valeur limite inférieure du régime de rotation moteur cible final est la valeur limite inférieure du régime de rotation moteur lorsque le degré d'ouverture du papillon des gaz se trouve à l'état entièrement fermé, ou
la valeur limite inférieure du régime de rotation moteur cible final est le régime de rotation moteur qui est défini par une ligne d'entraînement efficace de manière optimale, ou
la limite inférieure du régime de rotation moteur cible final est le régime de rotation au ralenti.

FIG.1

## FIG.2

FIG.3

# FIG.4

## FIG.5

# FIG.6

ENGINE ROTATION SPEED MAP

# FIG.7

# FIG.8

(a)

(b)

(c)

# FIG.9

FIRST ENGINE TORQUE MAP

# FIG.10

15B

BASIC ENGINE TORQUE
TARGET VALUE

CONVERSION
UNIT

+

15a

INERTIA TORQUE
CALCULATION UNIT

−

CVT LOSS
CALCULATION UNIT

−

15b     15c

×

TRANSMISSION RATIO
CALCULATION UNIT

×

BASIC DRIVING
WHEEL TORQUE
TARGET VALUE

FINAL REDUCTION
RATIO

×

BASIC TARGET ENGINE
ROTATION SPEED

EP 2 974 930 B1

# FIG.11

BASIC DRIVING WHEEL TORQUE TARGET VALUE

G2

$$\frac{P \times L \times s + 1}{L \times s + 1}$$

G1

$$\frac{1}{(T \times s + 1)}$$

FINAL DRIVING WHEEL TORQUE TARGET VALUE

T1

t0

TIME

$T1 \times P$

T1

Y2

Tg2

t0

TIME

$T1 \times P$

T1

Y1

tg1

TIME

# FIG.12

15D

FINAL DRIVING WHEEL
TORQUE TARGET VALUE

FINAL REDUCTION
RATIO

INVERSE
CONVERSION
UNIT

×

÷

÷

TRANSMISSION RATIO
CALCULATION UNIT

15e    15f

INERTIA TORQUE
CALCULATION UNIT

CVT LOSS
CALCULATION UNIT

15g

+

+

+

FINAL ENGINE
TORQUE TARGET
VALUE

FINAL TARGET ENGINE
ROTATION SPEED

# FIG.13

FIRST ENGINE TORQUE MAP

# FIG.14

15B

BASIC ENGINE TORQUE
TARGET VALUE → [ + ]   CONVERSION UNIT

CVT LOSS
CALCULATION UNIT → [ − ]

15b    15c

TRANSMISSION RATIO
CALCULATION UNIT

FINAL REDUCTION
RATIO

[ × × × ] → BASIC DRIVING
WHEEL TORQUE
TARGET VALUE

BASIC TARGET ENGINE
ROTATION SPEED

# FIG.15

(a)

REAR WHEEL TORQUE

ENGINE ROTATION
SPEED

ACCELERATOR
OPERATION AMOUNT
THROTTLE OPENING
DEGREE

t1

TIME

(b)

REAR WHEEL TORQUE

ENGINE ROTATION
SPEED

THROTTLE OPENING

ACCELERATOR
OPERATION AMOUNT
THROTTLE OPENING
DEGREE

t1

TIME

45

# FIG.16

EP 2 974 930 B1

# FIG.17

# FIG.18

EP 2 974 930 B1

FIG.19

# FIG.20

# FIG.21

(a)

(b)

# FIG.22

FIG.23

# FIG.24

EP 2 974 930 B1

# FIG.25

EP 2 974 930 B1

# FIG.26

ENGINE TORQUE

E

(a)

(c)

(d)

0

(b)

0

ENGINE ROTATION SPEED

# FIG.27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2851253 A1
- WO 2011021089 A2
- JP 3754188 B